# EUROPEAN PATENT APPLICATION

(11) **EP 2 437 053 A1**
(43) Date of publication of application: **04.04.2012**
(21) Application number: 10780660.6
(22) Date of filing: 28.05.2010
(51) Int. Cl.: G01N 29/26, G01N 27/90, G01N 29/24

(54) **SCANNING DEVICE FOR NONDESTRUCTIVE INSPECTION AND NONDESTRUCTIVE INSPECTION EQUIPMENT**

(30) Priority: 28.05.2009 JP 2009128998; 17.07.2009 JP 2009168962; 27.11.2009 JP 2009270015
(71) Applicant: Central Research Institute of Electric Power Industry, Chiyoda-ku Tokyo 1008126 (JP)
(72) Inventor: FUKUTOMI, Hiroyuki, Yokosuka-shi Kanagawa 240-0196 (JP); LIN, Shan, Yokosuka-shi Kanagawa 240-0196 (JP)
(74) Representative: McWilliams, David John
(86) International application number: PCT/JP2010/059142
(87) International publication number: WO 2010/137706

(57) **Abstract**

A non-destructive inspection scanning apparatus and a non-destructive inspection apparatus which can cope with the size and shape of a structure, which is an inspection target, in which attachment to the structure is facilitated, and which can be reduced in size and cost are provided. A non-destructive inspection scanning apparatus (2) that relatively moves a sensor head (3) employed to detect a flaw in an inspection target (P) with respect to a test surface of the inspection target (P) includes a rod-shaped guide portion (27) that is disposed at the inspection target (P) and that extends along a surface of the inspection target (P); a pair of wheels (23) having a ring-like groove portion (23F), which sandwiches the guide portion (27) therein, at a circumferential surface that comes in contact with the inspection target (P); a suctioning portion (23) that generates a suction force that presses the wheels (23) against the inspection target (P); and a casing (21) that holds the sensor head (3) and to which the pair of wheels (23) are attached so as to be rotatable about a rotation axis that extends in a direction that intersects a surface of the inspection target (P) to which the wheels (23) come in contact.

## Description

### {Technical Field}

The present invention relates to a non-destructive inspection scanning apparatus and a non-destructive inspection apparatus that are suitable for use in non-destructive inspection, such as ultrasonic flaw-detection inspection, eddy-current flaw-detection inspection, magnetic flaw-detection inspection, or flaw-detection inspection employing potentiometry, etc., particularly in a pipe-shaped structure.

### {Background Art}

It is generally known that a structure formed of a metal material gradually deteriorates due to the passage of time, load from repeated stress, etc., and, in some cases, a flaw, such as damage, is formed.
For example, it is known that damage also occurs in some cases in a cylindrical structure formed of metal, such as a cooling-water pipe, a steam pipe, etc. employed in a thermal power plant, a nuclear power plant, etc., and that an inherent flaw, such as a crack, tends to form at a welded portion of a pipe in particular, caused by poor winding, melting, etc. of slag at the time of welding.

The above-described inherent flaw, such as a crack, gradually develops into a large crack and, in some cases, eventually results in breakage of the structure such as a pipe.
In order to prevent such breakage, non-destructive inspection is performed, in which an inherent flaw, such as a crack, is detected, and the inherent flaw is evaluated without destroying the structure. Here, known non-destructive inspection for performing detection, etc. of an inherent flaw, such as a crack, etc., includes ultrasonic flaw-detection inspection, eddy-current flaw-detection inspection, magnetic flaw-detection inspection, flaw-detection inspection employing potentiometry, etc.

For example, ultrasonic flaw-detection inspection is performed by disposing a sensor head (probe), which transmits ultrasonic waves toward an inspection target, such as a pipe, and that receives ultrasonic waves (echo) reflected at the inspection target, at a surface (test surface) of an inspection region where the presence/absence of an inherent flaw in the inspection target is to be investigated, and by scanning the sensor head thereat.

Conventionally, an inspector manually performs the scanning of the sensor head; however, for the purpose of improving precision in detecting an internal flaw and saving labor in inspection, various scanning apparatuses for automating the scanning of the sensor head have been proposed (for example, see Patent Literature 1).

### {Citation List}

### {Patent Literature}

{PTL 1} Japanese Unexamined Patent Application, Publication No. 2006-170685.

### {Summary of Invention}

### {Technical Problem}

Patent Literature 1 discloses a technique for automating scanning of a sensor head by coupling an automatic ultrasonic flaw-detection inspection apparatus, which includes a sensor head holder for holding the sensor head, in the form of a ring along an outer circumferential surface of a pipe-shaped structure and moving the sensor head holder to the circumferential direction.
However, with the automatic ultrasonic flaw-detection inspection apparatus described above, the region that can be scanned with the sensor head is limited when the structure has a complex shape, as in a nozzle stub, etc. where one pipe-shaped structure (main pipe) has another pipe-shaped structure (branch pipe) welded at its outer circumferential surface, etc. or in an elbow portion of a pipe-shaped structure that extends in a vertical direction, etc. In particular, there is a problem in that it is difficult to inspect a welded portion between a first pipe-shaped structure and another pipe-shaped structure for an internal flaw.

On the other hand, there is a problem in that, when performing inspection for an internal flaw, the sensor head holder, etc. needs to be coupled in the form of a ring along the outer circumferential surface of the pipe-shaped structure, which is the inspection target, and installing the automatic ultrasonic flaw-detection inspection apparatus takes time and labor.
Furthermore, there is a problem in that, if the diameter of the pipe-shaped structure, which is the inspection target, is too small relative to the sensor head holder, etc., the sensor head holder, etc. cannot be coupled, in the form of a ring, along the outer circumferential surface of the pipe-shaped structure, and inspection for an internal flaw cannot be performed.

On the other hand, in the case where the above-described automatic ultrasonic flaw-detection inspection apparatus is employed for internal-flaw inspection of a pipe in a nuclear power plant in which primary cooling water flows, in some cases, the automatic ultrasonic flaw-detection inspection apparatus is left in a reactor vessel after the inspection, because the automatic ultrasonic flaw-detection inspection apparatus is exposed to radioactive rays (exposed to radiation).
Because the above-described automatic ultrasonic flaw-detection inspection apparatus is configured to be coupled in the form of a ring along an outer circumferential surface of a pipe-shaped structure, which is the inspection target, the size of the automatic ultrasonic flaw-detection inspection apparatus increases depending on the pipe-shaped structure, and the cost thereof also increases. As a result, there is a problem in that it becomes difficult to employ the above-described automatic ultrasonic flaw-detection inspection apparatus in a primary cooling water pipe where it is difficult to recover the automatic ultrasonic flaw-detection inspection apparatus after inspection.

In addition to the above-described ultrasonic flaw-detection inspection apparatus, there is a known technique of automating scanning of a sensor head by securing a guide member, such as a rail, to a pipe-shaped structure, which is an inspection target, and by moving a sensor head holder that is attached to the guide member along the guide member.
Examples of the guide members include a ring-shaped member that extends in a circumferential direction of a pipe-shaped structure, a rod-shaped member that extends in a longitudinal direction of a pipe-shaped structure, and so on.

Furthermore, examples of methods of moving a sensor head include a method of moving it by rotationally driving wheels that are brought into contact with a surface of a pipe-shaped structure or a guide member, a method in which a rack-and-pinion mechanism is provided between a guide member and a sensor head holder and the sensor head holder is moved by the mechanism, and so on.

However, because the sensor head holder is attached to the pipe-shaped structure via the guide member in all of these methods, the guide member is required to have sufficient strength for supporting the sensor head holder. Furthermore, the guide member is required to be secured to the pipe-shaped structure securedly enough to endure its own weight and the weight of the sensor head holder.

For example, in the case where a test surface with a complex shape, as in a welded portion of a nozzle stub, is inspected, a guide member that extends along the test surface needs to be employed. As described above, however, it is difficult to bend the guide member having strength that can support the sensor head holder into a shape that conforms to the test surface, and such bent guide members need to be prepared for individual test surfaces having different shapes. Accordingly, there is a problem in that inspection at a welded portion of a nozzle stub is difficult to perform.

Furthermore, because the guide member needs to be secured to the pipe-shaped structure securely enough to endure the weight of the guide member and the sensor head holder, there is a problem in that attaching the guide member, in particular, attaching the guide member at a welded portion of a nozzle stub, or an elbow portion of a pipe that extends in a vertical direction, takes time and labor.

The present invention has been conceived in order to solve the above-described problems, and object thereof is to provide a non-destructive inspection scanning apparatus and a non-destructive inspection apparatus that are capable of coping with the shape and size of a structure, which is an inspection target, that can be easily attached to the structure, and that can be reduced in size and cost.

### {Solution to Problem}

To achieve the above-described object, the present invention employs the following solutions.
A non-destructive inspection scanning apparatus according an aspect of the present invention is a non-destructive inspection scanning apparatus that relatively moves a sensor head employed to detect a flaw in an inspection target with respect to a test surface of the inspection target including a rod-shaped guide portion that is disposed at the inspection target and that extends along a surface of the inspection target; a pair of wheels having a ring-like groove portion, which sandwiches the guide portion therein, at a circumferential surface that comes in contact with the inspection target; a suctioning portion that generates a suction force that presses the wheels against the inspection target; and a casing that holds the sensor head and to which the pair of wheels are attached so as to be rotatable about a rotation axis that extends in a direction that intersects a surface of the inspection target to which the wheels come in contact.

With the present invention, the casing that holds the sensor head is attached to the inspection target with the suction force generated at the suctioning portion and is relatively moved with respect to the inspection target with the rotation of the pair of wheels. Because the guide portion is sandwiched in the groove portion in the wheels and because the wheels rotate about the rotation axis, the orientation of the wheels change to a direction in which the guide portion extends, and the casing can be moved along the guide portion.

Specifically, because the casing is directly attached to the inspection target with the suction force generated at the suctioning portion, as compared with a method in which the casing is attached to the guide portion disposed at the inspection target, the guide portion does not need to support the weight of the casing and the sensor head; therefore, a simple method in which attachment/detachment is easy can be employed in attaching the guide portion to the inspection target.
Because the guide portion does not need to have strength required to support the casing, the sensor head, etc., the guide portion can be easily deformed into a shape that conforms to the surface of the inspection target. For example, the guide portion can be easily deformed into a shape that conforms to a surface having a complicated shape as in an elbow portion of a pipe, a welded portion in a nozzle stub, etc.

On the other hand, because the casing is attached to the inspection target with the suction force, as compared with, for example, a method in which the casing is attached to the inspection target by surrounding it in the form of a ring, the non-destructive inspection scanning apparatus can be reduced in size. Because the casing having the sensor head is moved with respect to the inspection target with the pair of wheels, as compared with, for example, the case in which the casing is moved with four wheels, the non-destructive inspection scanning apparatus can be reduced in size.
Accordingly, the occurrence of interference between the casing and the inspection target can be prevented, and the limitations with regard to the size and shape of the inspection target when attaching the casing to the inspection target can be relaxed.

In the above-described invention, it is desirable that the inspection target be formed of a magnetic material; and that the suctioning portion generates a suction force with respect to the inspection target with a magnetic force.

With the present invention, the wheels are pressed against the inspection target by the suction force that is exerted between the suctioning portion and the inspection target, and the casing is directly attached to and removed from the inspection target. Accordingly, as compared with the case in which the casing is attached to the guide portion disposed at the inspection target, attachment/removal of the non-destructive inspection scanning apparatus to/from the inspection target is facilitated.
The suctioning portion may be integrally formed with the wheels or may be disposed on the casing separately from the wheels; it is not particularly limited.

In the above-described invention, it is desirable that the guide portion be attached to the inspection target with a securing portion that adheres to the inspection target with a magnetic force.

With the present invention, by adhering the securing portion to the inspection target with the guide portion interposed therebetween, the guide portion is attached to the inspection target. On the other hand, by moving the securing portion away from the inspection target, the guide portion can be removed from the inspection target; therefore, attachment/detachment of the guide portion is facilitated.

Because the casing is attached to the inspection target by the suction force generated at the suctioning portion, the securing portion only needs to generate enough suction force to attach and secure only the guide portion to the inspection target. Accordingly, as compared with the case in which, for example, the guide portion supports the casing, etc., the force required to attach/detach the securing portion to/from the inspection target can be small, and the attachment/detachment of the guide portion is facilitated.

In the above-described invention, it is desirable that the guide portion be formed of an elastic material.

With this invention, the guiding performance of the wheels and the tracking performance of the guide portion with respect to the inspection target can both be achieved.
Examples of the elastic material include metal materials having large elastic modulus, rubber materials having low elastic modulus, etc. For example, in the case in which a metal material is employed as the elastic material, the guiding performance of the wheels is increased. On the other hand, in the case in which a rubber material is employed, the tracking performance of the guide portion with respect to the inspection target is increased.

In the above-described invention, it is desirable that a guide-side toothed portion, in which protrusions and recesses are arranged along a longitudinal direction of the guide portion, be provided in a region of the guide portion that faces the wheels; and that a wheel-side toothed portion that engages with the guide-side toothed portion and that has protrusions and recesses arranged in the circumferential direction of the groove portion be provided at a bottom surface of the groove portion.

With the present invention, by having the guide-side toothed portion and the wheel-side toothed portions engage with each other, the relative position of the non-destructive inspection scanning apparatus with respect to the guide portion disposed at the inspection target can be more accurately maintained.

For example, in the case where the guide portion is disposed at the surface of the inspection target extending in the top-bottom direction, the non-destructive inspection scanning apparatus is moved in the top-bottom direction against the force of gravity. At this time, slipping tends to occur between the wheels adhered with the suctioning portions and the inspection target, and the relative position between the guide portion disposed at the inspection target and the non-destructive inspection scanning apparatus tends to change.

On the other hand, when the guide-side toothed portion is engaged with the wheel-side toothed portions, part of the downward force exerted on the non-destructive inspection scanning apparatus due to gravity is received by the guide portion. Accordingly, it is less likely that slipping occurs between the wheels and the inspection target, and the relative position between the guide portion disposed at the inspection target and the non-destructive inspection scanning apparatus is less like to change.

In the above-described invention, it is desirable that the inspection target be formed of a non-magnetic material; that a cover portion formed of a magnetic material be disposed at at least a region of the inspection target where the guide portion is disposed; and that the suctioning portion generate a suction force with respect to the inspection target by means of a magnetic force.

With this invention, the casing having the sensor head can be attached to the inspection target by employing the cover portion, even if the inspection target is formed of a non-magnetic material. That is, by disposing a cover portion formed of a magnetic material at the inspection target and by attaching the casing having the sensor head to the cover portion, the casing can be attached to the inspection target.
By moving the casing over the cover portion, the sensor head can be relatively moved with respect to the test surface in the inspection target.

In the above-described invention, it is desirable that a shift prevention portion, which extends along a direction in which the wheels move, be disposed at a position in the inspection target that is adjacent to the wheels.

With the present invention, even if the traveling direction of the wheels deviates from a predetermined direction, when the wheels come into contact with the shift prevention portion, the traveling direction of the wheels can be returned to the predetermined direction. Particularly in the case where the surface of the inspection target extends in a direction that intersects with the horizontal direction, the traveling direction of the wheels tends to deviate in the direction in which gravity acts. In a case like this, by employing the shift prevention portion, the non-destructive inspection scanning apparatus can be prevented from shifting downward.

A non-destructive inspection apparatus according to an aspect of the present invention is provided with a sensor head that is employed to detect a flaw in an inspection target; and a control unit that controls the sensor head; and a non-destructive inspection scanning apparatus of the present invention that relatively moves the sensor head with respect to the inspection target.

With the present invention, because the non-destructive inspection scanning apparatus of the invention described above is provided, limitations with regard to the size and shape of the inspection target can be reduced, attachment to the inspection target can be facilitated, and the non-destructive inspection scanning apparatus can be reduced in size and cost.

The above-described invention desirably includes an ultrasonic device that transmits and receives ultrasonic waves; an elastic body that is disposed between the ultrasonic device and the test surface and that propagates the ultrasonic waves between the ultrasonic device and the test surface; and a main body that holds the ultrasonic device and the elastic body.

In the above-described invention, the elastic body may be formed of an aqueous gel.

In the above-described invention, the elastic body may be formed of an oil-based gel.

In the above-described invention, the elastic body may be formed of a gel that does not contain a dispersion medium that leaches and/or migrates.

With the present invention, the ultrasonic waves transmitted from the ultrasonic device are made incident on the test surface in the inspection target via the elastic body. On the other hand, the ultrasonic waves reflected at the inspection target are received from the test surface by the ultrasonic device via the elastic body.
The elastic body can be brought into close contact with the test surface regardless of condition of the test surface, such as the shape, surface roughness, etc. of the test surface. Accordingly, the ultrasonic waves can be stably propagated between the elastic body and the test surface. At this time, liquid, such as a couplant (contact medium), oil, water, etc., is interposed between the elastic body and the test surface.

### {Advantageous Effects of Invention}

With the non-destructive inspection scanning apparatus and the non-destructive inspection apparatus of the present invention, a casing that holds a sensor head is attached to an inspection target by a suction force generated from an suctioning portion, a guide portion is sandwiched in a groove portion of wheels, and the direction of the wheels are changed in the direction into which the guide portion extends; therefore, an advantage is afforded in that it is possible to cope with the diameter and shape of a pipe-shaped structure, which is the inspection target, attachment to the pipe-shaped structure is easy, and size and cost can also be reduced.

### {Brief Description of Drawings}

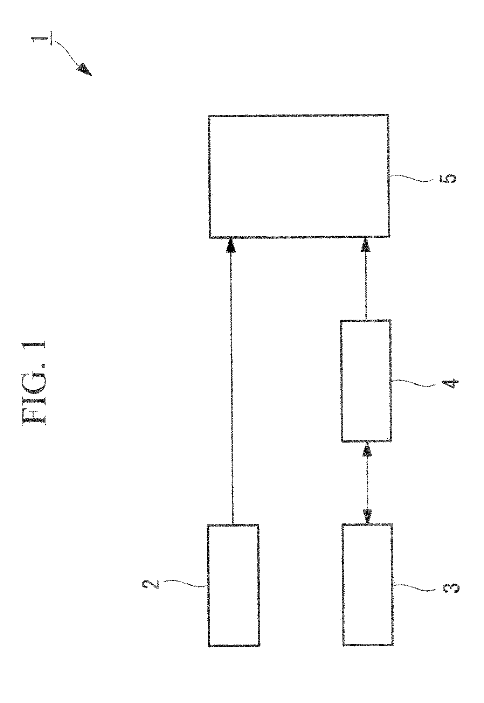

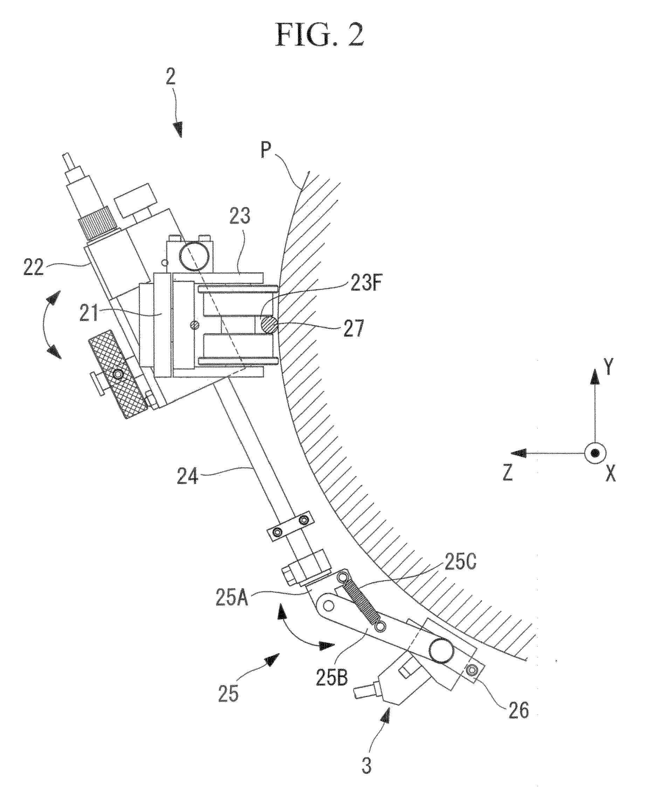

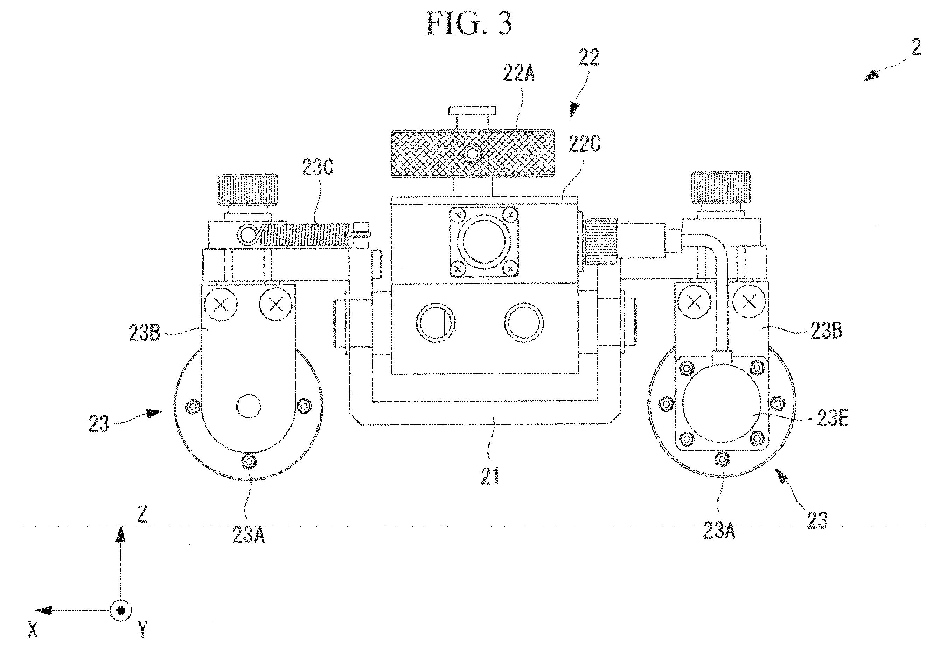

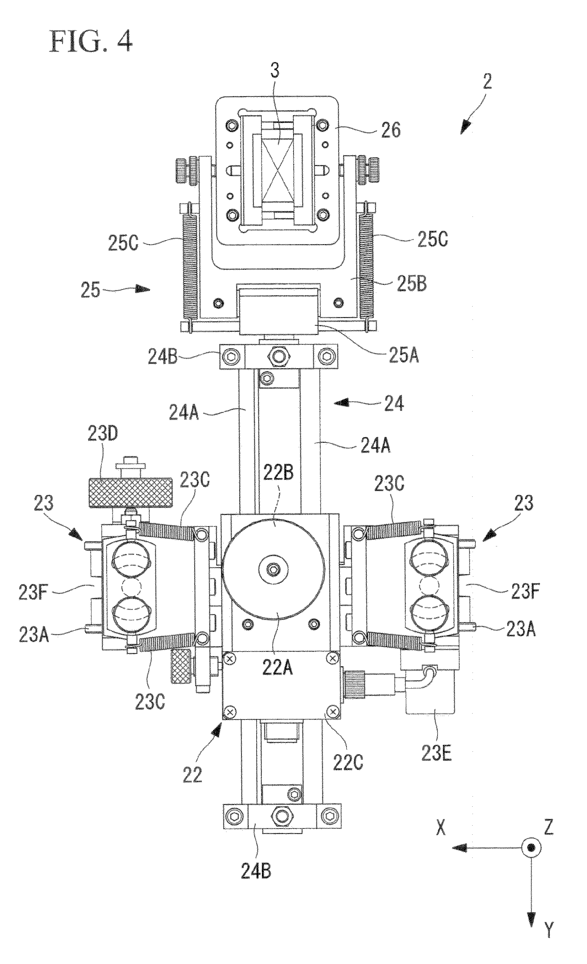

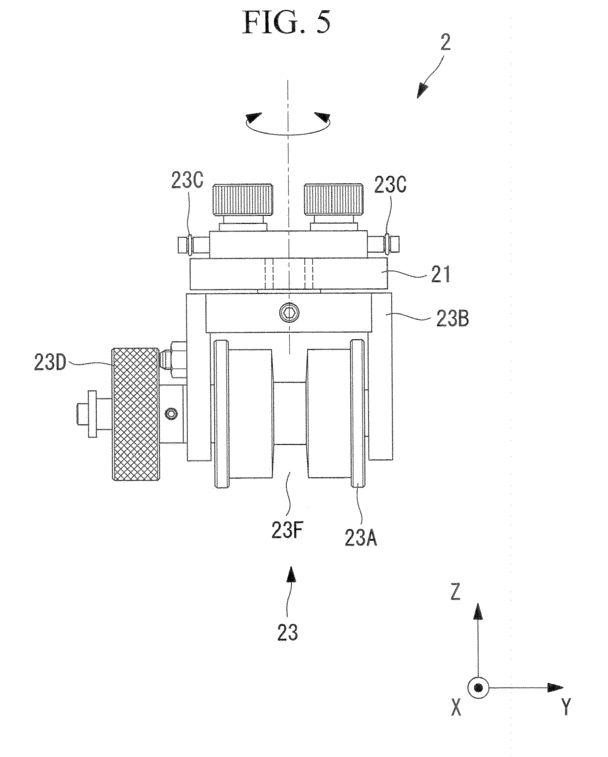

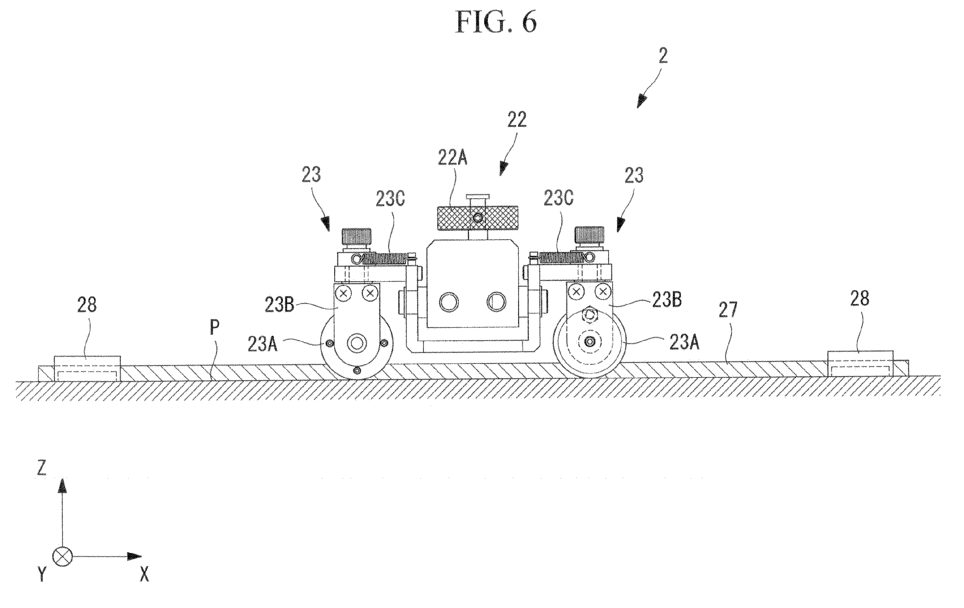

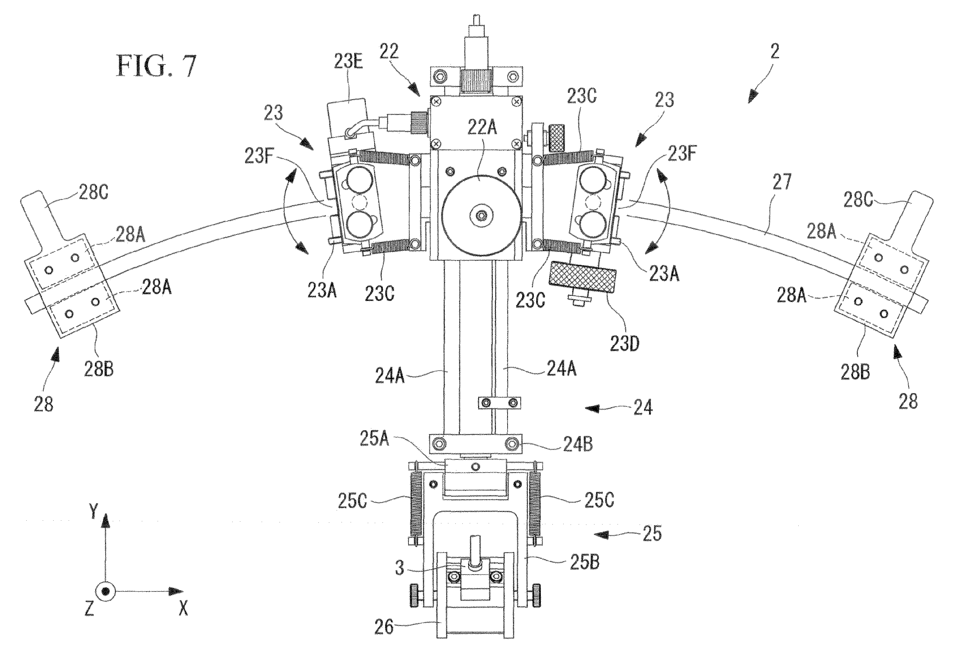

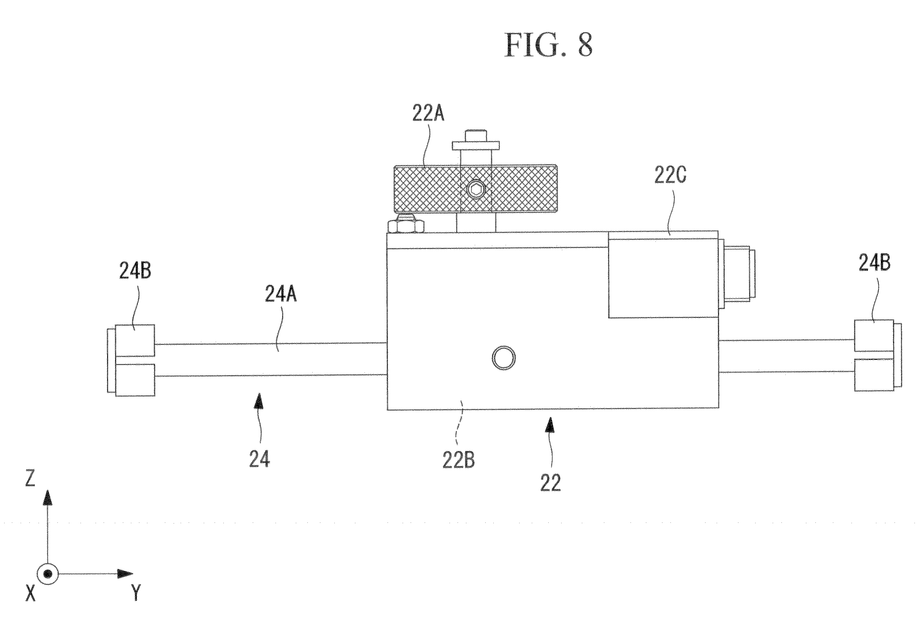

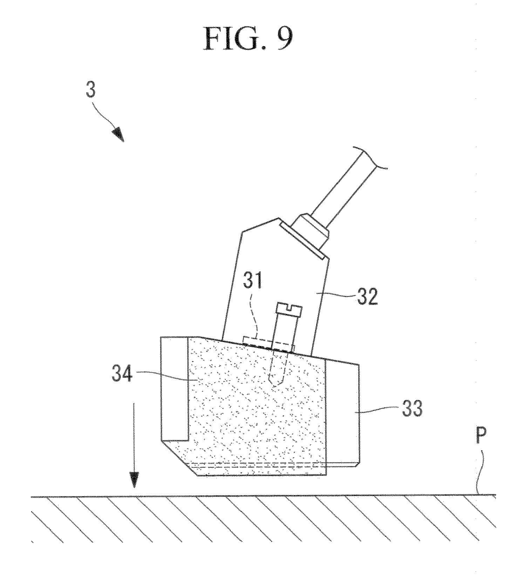

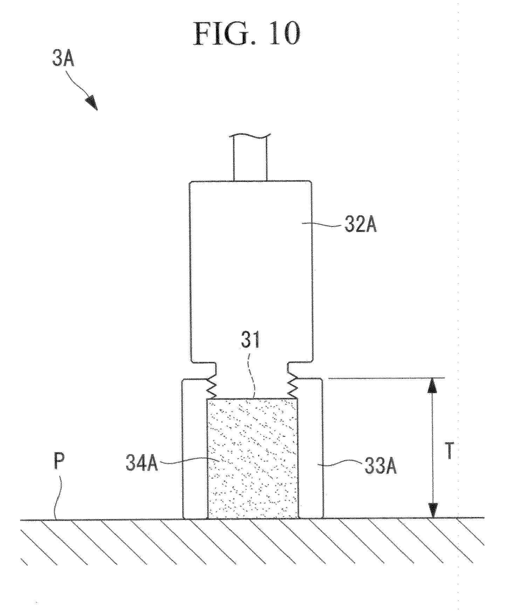

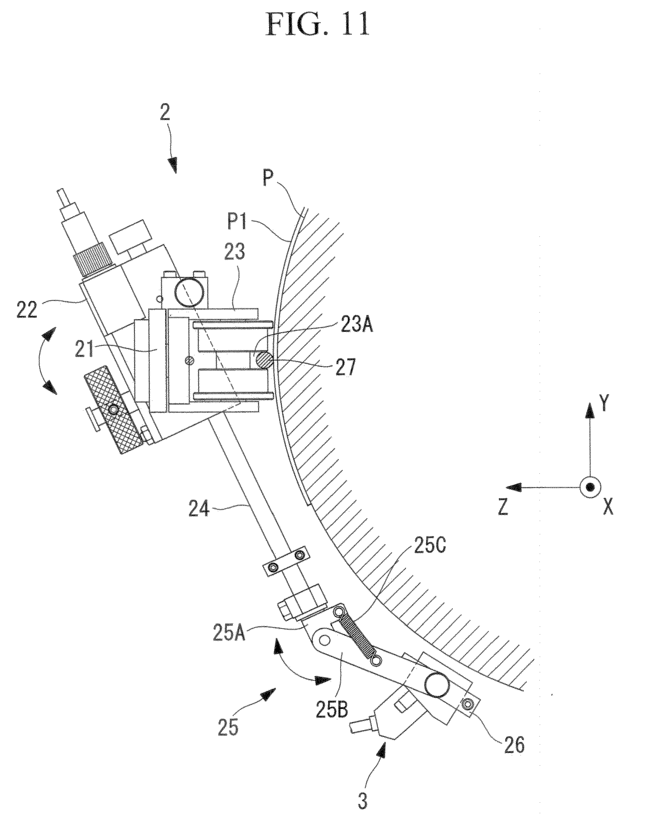

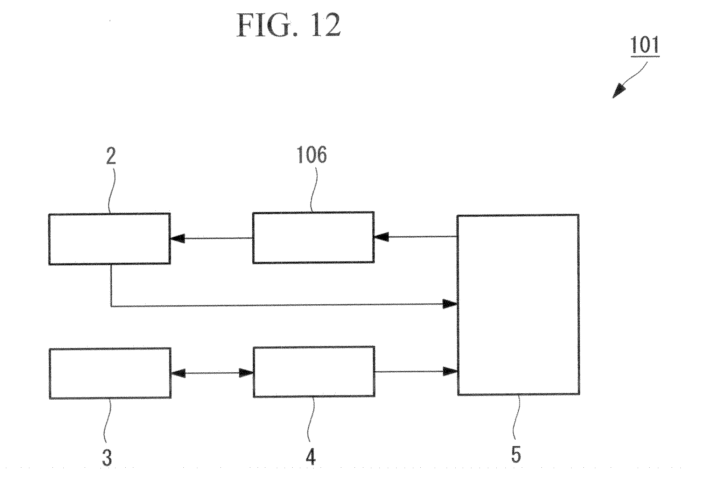

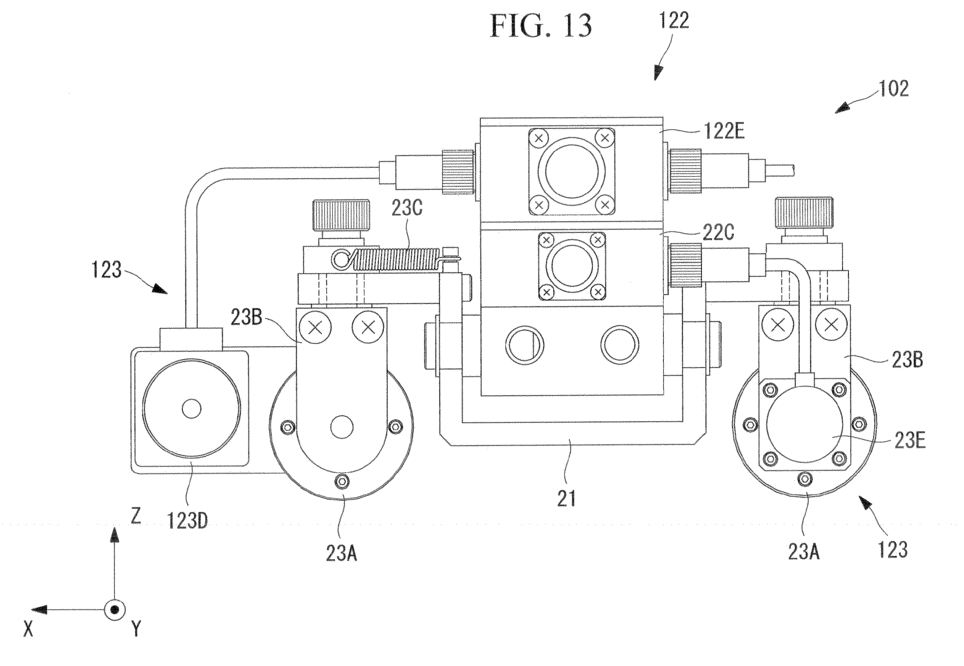

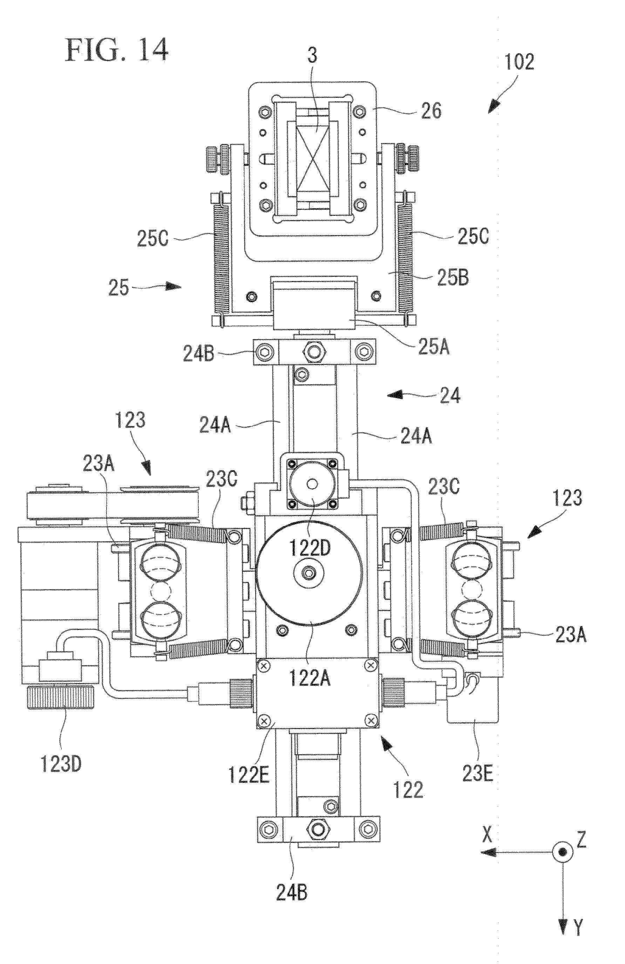

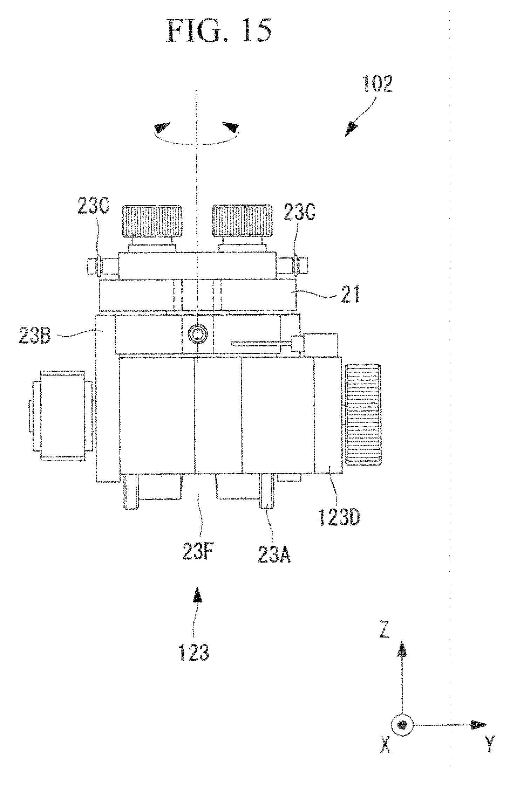

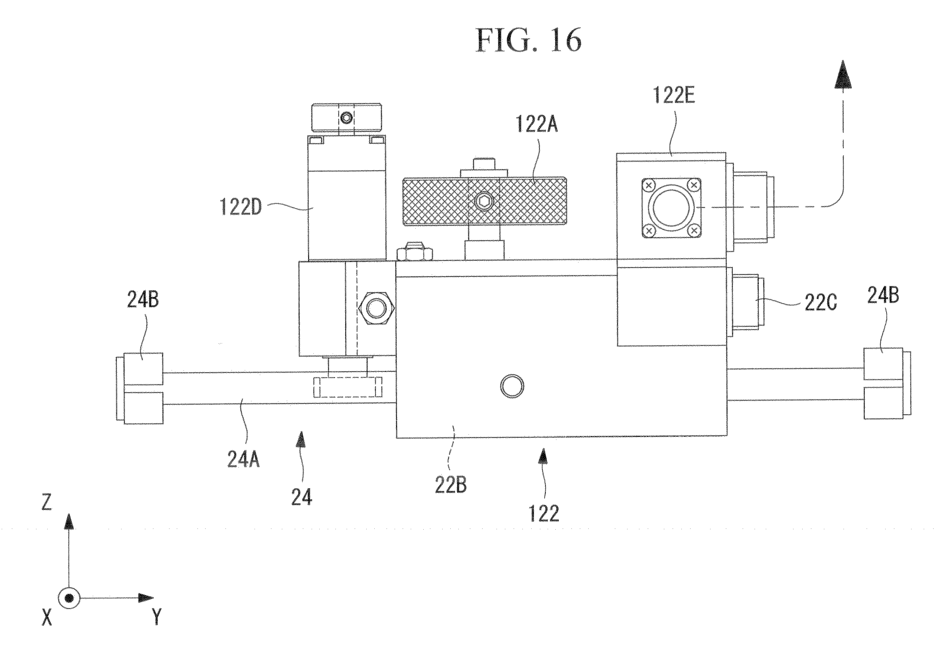

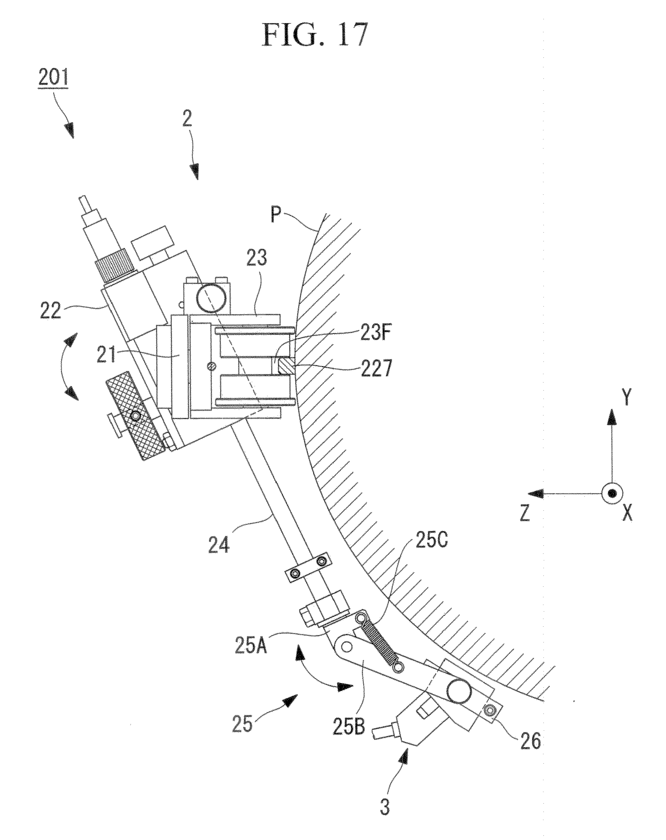

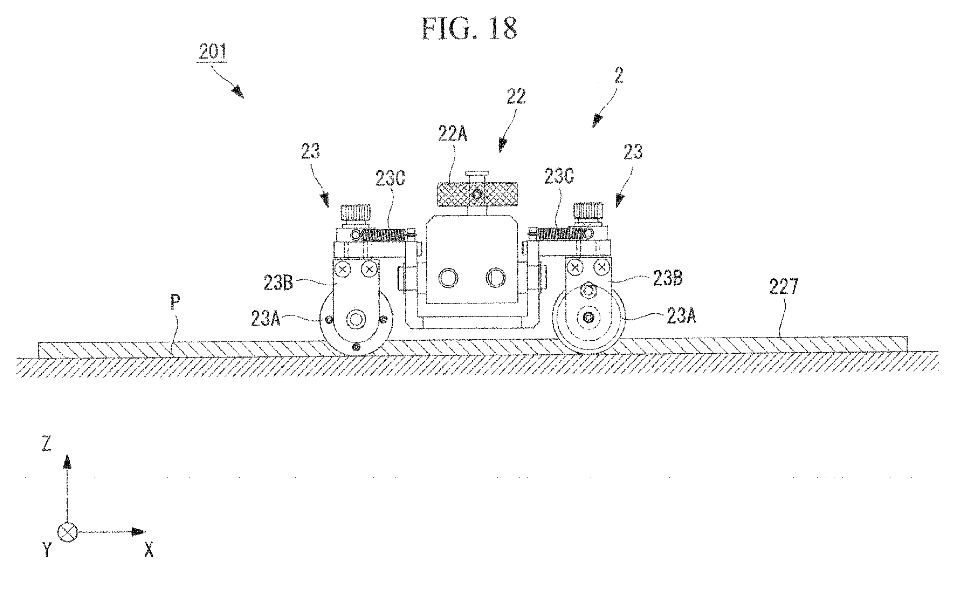

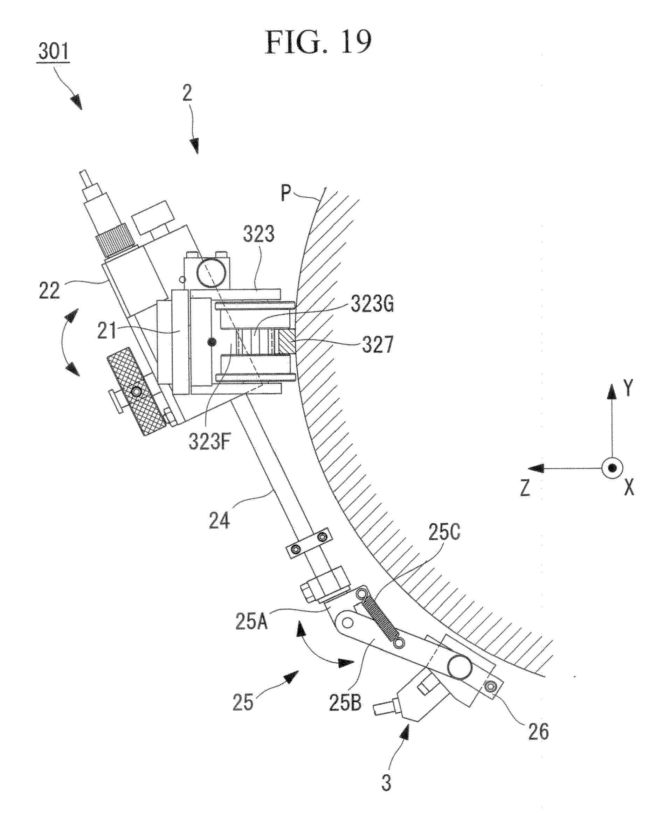

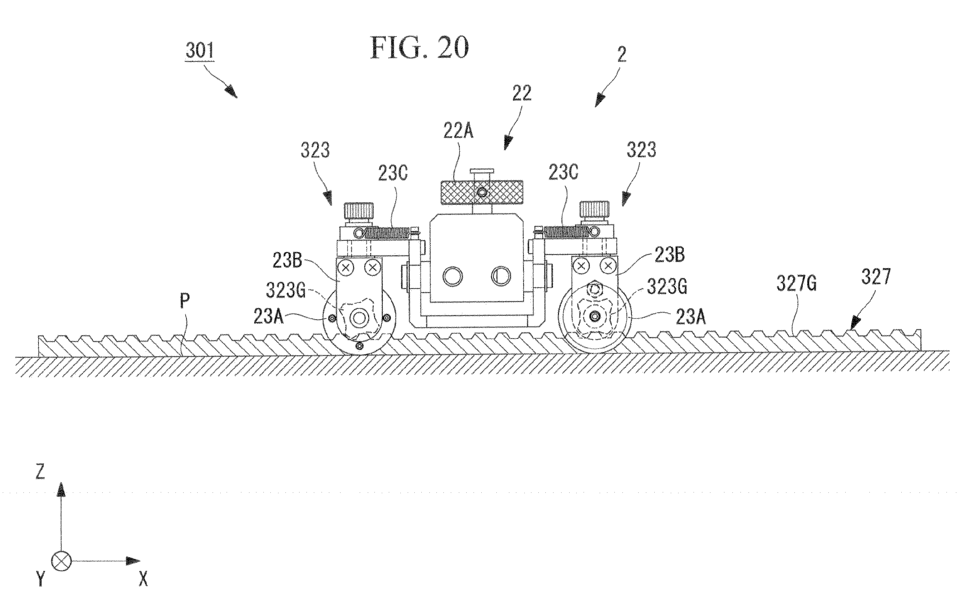

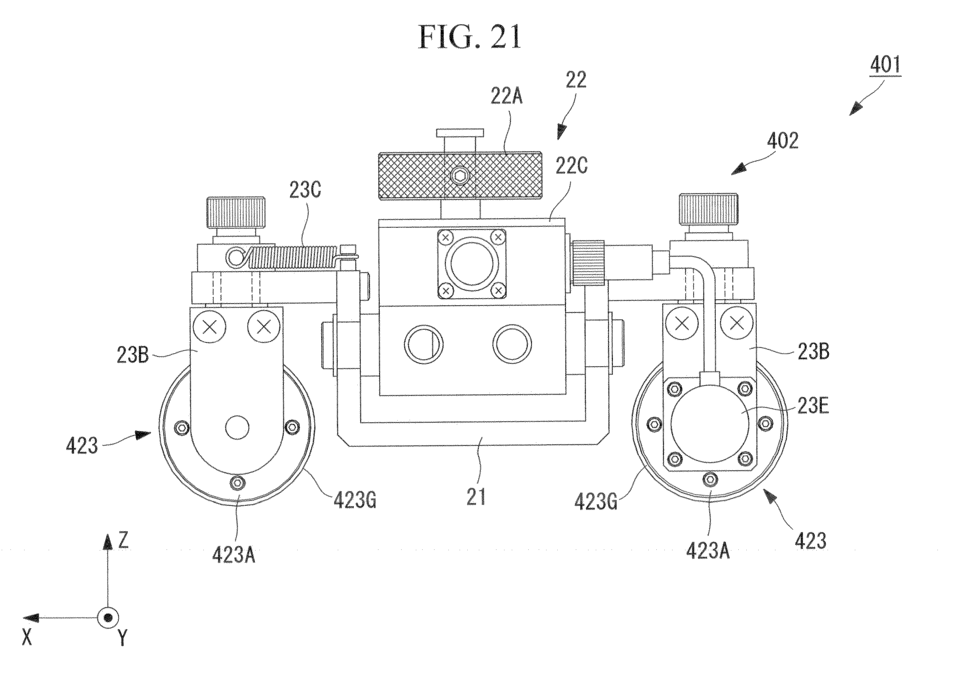

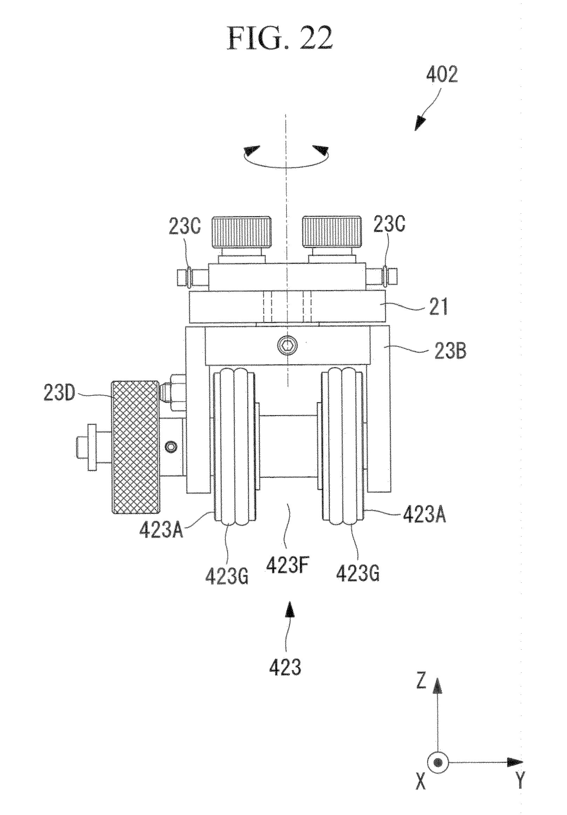

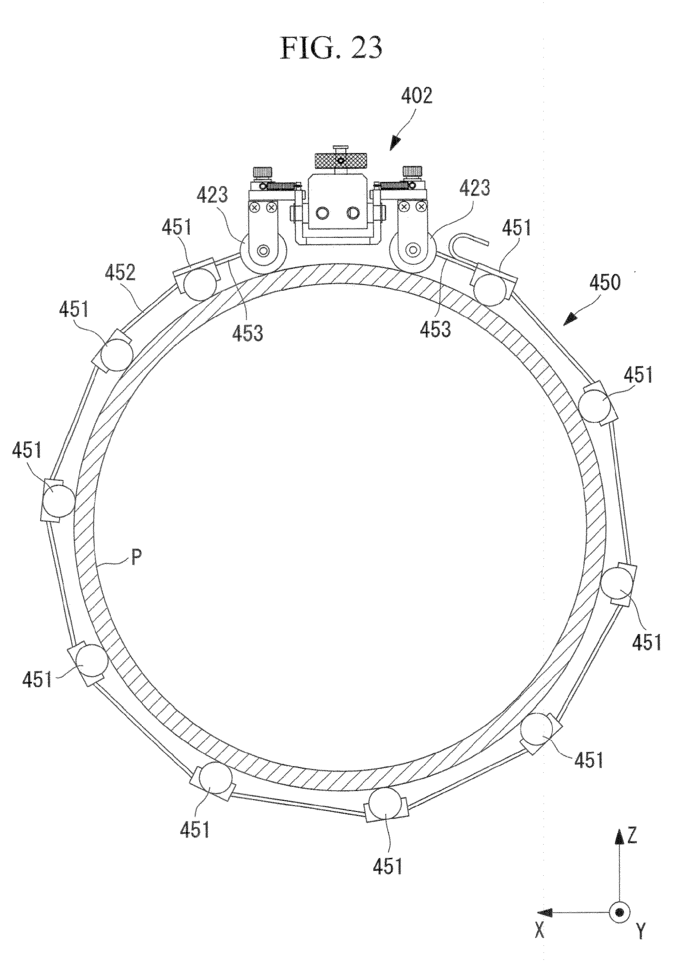

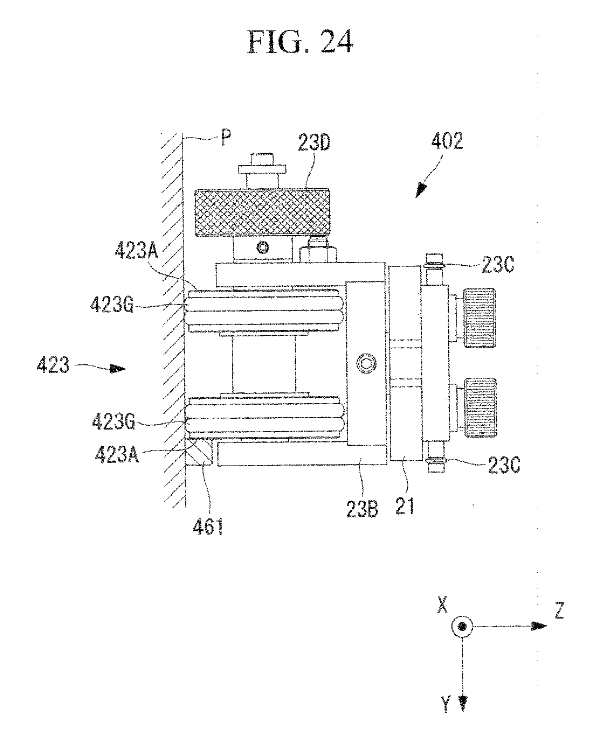

{Fig. 1} Fig. 1 is a schematic view for explaining, in outline, an ultrasonic flaw-detection inspection apparatus according to a first embodiment of the present invention.
{Fig. 2} Fig. 2 is a schematic view for explaining the positional relationship between a scanner in Fig. 1 and a pipe.
{Fig. 3} Fig. 3 is a front view for explaining the configuration of the scanner in Fig. 2.
{Fig. 4} Fig. 4 is a top view for explaining the configuration of the scanner in Fig. 2.
{Fig. 5} Fig. 5 is a side view for explaining the configuration of the scanner in Fig. 2.
{Fig. 6} Fig. 6 is a front view for explaining the positional relationship between the scanner in Fig. 1 and an X-axis track rail guide.
{Fig. 7} Fig. 7 is a top view for explaining the positional relationship between the scanner in Fig. 1 and an X-axis track rail guide.
{Fig. 8} Fig. 8 is a partial side view for explaining the configuration of a Y-axis unit and a Y-axis guide rod in Fig. 2.
{Fig. 9} Fig. 9 is a partial enlarged view for explaining the configuration of a sensor head in Fig. 2.
{Fig. 10} Fig. 10 is a partial enlarged view for explaining another example of the sensor head in Fig. 9.
{Fig. 11} Fig. 11 is a schematic view for explaining another example of the scanner in Fig. 2.
{Fig. 12} Fig. 12 is a schematic view for explaining, in outline, an ultrasonic flaw-detection inspection apparatus according to a second embodiment of the present invention. {Fig. 13} Fig. 13 is a front view for explaining the configuration of a scanner in Fig. 12.
{Fig. 14} Fig. 14 is a top view for explaining the configuration of the scanner in Fig. 12.
{Fig. 15} Fig. 15 is a side view for explaining the configuration of the scanner in Fig. 12.
{Fig. 16} Fig. 16 is a partial side view for explaining the configuration of a Y-axis unit and a Y-axis guide rod in Fig. 13.
{Fig. 17} Fig. 17 is a schematic view for explaining the positional relationship between an ultrasonic flaw-detection inspection apparatus according to a third embodiment of the present invention and a pipe.
{Fig. 18} Fig. 18 is a front view for explaining the positional relationship between a scanner and an X-axis track rail guide in Fig. 17.
{Fig. 19} Fig. 19 is a schematic view for explaining the positional relationship between an ultrasonic flaw-detection inspection apparatus according to a fourth embodiment of the present invention and a pipe.
{Fig. 20} Fig. 20 is a front view for explaining the positional relationship between a scanner and an X-axis track rail guide in Fig. 19.
{Fig. 21} Fig. 21 is a front view for explaining the configuration of wheels of a scanner according to a fifth embodiment of the present invention.
{Fig. 22} Fig. 22 is a side view for explaining the configuration of the wheels in Fig. 21
{Fig. 23} Fig. 23 is a schematic view for explaining a state in which the scanner in Fig. 21 is disposed on a pipe.
{Fig. 24} Fig. 24 is a schematic view for explaining a state in which the scanner in Fig. 21 is disposed on a pipe that extends vertically.

### {Description of Embodiments}

### {First Embodiment}

An ultrasonic flaw-detection inspection apparatus according to a first embodiment of the present invention will be described below with reference to Figs. 1 to 11.
Fig. 1 is a schematic view for explaining, in outline, the ultrasonic flaw-detection inspection apparatus according this embodiment. Fig. 2 is a schematic view for explaining the positional relationship between a scanner in Fig. 1 and a pipe.
In this embodiment, the non-destructive inspection apparatus of the present invention will be described as applied to an ultrasonic flaw-detection inspection apparatus (non-destructive inspection apparatus) 1 that inspects the presence/absence of an internal flaw in a pipe (inspection target) P by employing an ultrasonic flaw-detection inspection method.

Note that the non-destructive inspection apparatus of the present invention may be applied to the ultrasonic flaw-detection inspection apparatus 1 that is employed in inspection of the presence/absence of an internal flaw with the ultrasonic flaw-detection inspection method, as described above, or it may be employed in inspection of the presence/absence of an internal flaw in which an eddy-current flaw-detection inspection method, a magnetic flaw-detection inspection method, or a potentiometry is employed; it is not particularly limited.
In this embodiment, the pipe P will be described as applied to that formed of a material to which a magnet is adheres.

As shown in Figs. 1 and 2, the ultrasonic flaw-detection inspection apparatus 1 is mainly provided with a scanner (non-destructive inspection scanning apparatus) 2, a sensor head 3, an ultrasonic flaw-detection inspection device (control unit) 4, and an information processing unit 5.
In this embodiment, to simplify the explanation, descriptions will be given assuming that a direction in which the scanner 2 moves, which is a direction along a surface of the pipe P, is an X-axis direction, that a direction perpendicular to the X-axis direction is a Y-axis direction, and that a direction perpendicular to the surface of the pipe P is a Z-axis direction.

Fig. 3 is a front view for explaining the configuration of the scanner in Fig. 2. Fig. 4 is a top view for explaining the configuration of the scanner in Fig. 2. Fig. 5 is a side view for explaining the configuration of the scanner in Fig. 2.
As shown in Fig. 2, the scanner 2 relatively moves, i.e. scans, the sensor head 3 with respect to the surface of the pipe P.

As shown in Figs. 3 and 5, the scanner 2 is provided with an X-axis unit (casing) 21, a Y-axis unit (casing) 22, a magnetic roller (wheel, suctioning portion) 23, Y-axis guide rod 24, a sensor head attachment fork 25, and a sensor head holder 26.

Fig. 6 is a front view for explaining the positional relationship between the scanner in Fig. 1 and an X-axis track rail guide. Fig. 7 is a top view for explaining the positional relationship between the scanner in Fig. 1 and the X-axis track rail guide.
As shown in Figs. 2, 6, and 7, the scanner 2 is provided with an X-axis track rail guide (guide portion) 27 and an X-axis track rail fixture (securing portion) 28.

As shown in Figs. 3 to 5, the X-axis unit 21 is where the Y-axis unit 22 and the magnetic roller 23 are attached and is a plate-like part that serves as a base for the scanner 2. Specifically, the Y-axis unit 22 is disposed at a pair of plate-like parts that are provided at a center of the X-axis unit 21 and that extend in the Z-axis direction, and the magnetic rollers 23 are disposed at plate-like parts, at both ends in the X-axis direction, that extend in the X-axis and Y-axis directions.

Fig. 8 is a partial side view for explaining the configuration of the Y-axis unit and the Y-axis guide rod in Fig. 2.
As shown in Figs. 3 to 5 and Fig. 8, the Y-axis unit 22 is where the X-axis unit 21 is attached, and where the Y-axis guide rod 24 is also attached.
Specifically, the Y-axis unit 22 is a member formed in a cuboid shape and is attached to the X-axis unit 21 so as to be rotatable about a rotation axis that extends along the X-axis direction. The Y-axis guide rod 24 that extends in the Y-axis direction is attached to the Y-axis unit 22 by penetrating therethrough.

The Y-axis unit 22 is provided with a Y-axis step-feeding handle 22A, a Y-axis rotary encoder 22B, and an encoder connector box 22C.

The Y-axis step-feeding handle 22A moves the Y-axis guide rod 24 in the Y-axis direction and has a discoid member disposed at a top surface of the Y-axis unit 22.
The Y-axis step-feeding handle 22A is disposed so as to be rotatable about a rotation axis that extends in the Z-axis direction, and, by rotating the Y-axis step-feeding handle 22A, the sensor head 3 and the Y-axis guide rod 24 are moved in a positive Y-axis direction or a negative Y-axis direction.

In this embodiment, the Y-axis step-feeding handle 22A will be described as applied to an example where it is configured to be rotated step-wise, and, by rotating the Y-axis step-feeding handle 22A by a single step, the Y-axis guide rod 24 is moved in the positive Y-axis direction or the negative Y-axis direction by a distance corresponding to a single step.

The Y-axis rotary encoder 22B measures a position of the Y-axis guide rod 24 or its traveled distance and measures traveled distances of the sensor head 3 and the Y-axis guide rod 24 in the positive Y-axis direction or the negative Y-axis direction. The Y-axis rotary encoder 22B is disposed inside the Y-axis unit 22.
Measurement signals output from the Y-axis rotary encoder 22B are input to the information processing unit 5 via the encoder connector box 22C.

The encoder connector box 22C is a connecting portion between an X-axis rotary encoder 23E, described later, a Y-axis rotary encoder 22B, and the information processing unit 5.

Although the X-axis unit 21 and the Y-axis unit 22 in this embodiment are described as applied to those formed of an aluminum alloy, they are not limited to those formed of aluminum alloy; they are not particularly limited.

As shown in Figs. 3 to 5, the magnetic rollers 23 are parts that come in contact with and adhere to the pipe P, and move the scanner 2 along the surface of the pipe P. The magnetic rollers 23 are attached at one end of the X-axis unit 21 in the X-axis direction and the other end thereof, respectively, and are attached so as to be rotatable about the rotation axis that extends in the Z-axis direction.

The magnetic rollers 23 are provided with a roller main body 23A, a roller supporting portion 23B, and a roller spring portion 23C. An X-axis step-feeding handle 23D is provided at one of the pair of the magnetic rollers 23, and an X-axis rotary encoder 23E is provided at the other.

The roller main body 23A is supported by a roller supporting portion 23B so as to be rotatable about a rotation axis that extends in the Y-axis direction, and is a rod-like member that revolves around the outer circumferential surface of the pipe P. On the other hand, because the roller main body 23A is provided with a member that generates a magnetic force, such as a permanent magnet, the roller main body 23A adheres to the pipe P by means of the magnetic force.
A groove portion 23F is formed at a circumferential surface of the roller main body 23A where it comes in contact with the pipe P.

The groove portion 23F is a recess formed at the circumferential surface of the roller main body 23A in a ring-like manner, and the X-axis track rail guide 27 is sandwiched therein when the roller main body 23A is adhered to the pipe P. Therefore, the length in the width direction (Y-axis direction) and the length in the depth direction (Z-axis direction) of the groove portion 23F are longer than the diameter of the X-axis track rail guide 27 in a cross-section.

The roller supporting portion 23B supports the roller main body 23A so as to be movable on the outer circumferential surface of the pipe P and is rotatably attached to the X-axis unit 21. Specifically, it is attached to the X-axis unit 21 so as to be rotatable about a rotation axis that extends in the Z-axis direction.
The roller spring portion 23C that applies a bias so that the rotation axis and the Y-axis of the roller main body 23A become parallel to each other is provided at a top end (an end in a positive Z-axis direction) of the roller supporting portion 23B.

The roller spring portion 23C is disposed between the roller supporting portion 23B and the X-axis unit 21, and two roller spring portions 23C are provided for a single roller supporting portion 23B.
Specifically, roller spring portions 23C are respectively attached at one end thereof to the top end of the roller supporting portion 23B at both ends in the Y-axis direction, and the other ends of the roller spring portions 23C are attached at a region near a center of the X-axis unit 21.

When no external force is exerted on the roller supporting portion 23B, the roller supporting portion 23B freely rotates about the rotation axis thereof, and the biasing forces from the two roller spring portions 23C are equal to each other. That is, the rotation axis of the roller main body 23A and the Y-axis become parallel to each other.

On the other hand, when the roller supporting portion 23B receives an external force and rotates about the rotation axis thereof in one rotation direction, one of the roller spring portions 23C expands and the other roller spring portion 23C is compressed. The biasing force from the expanded roller spring portion 23C becomes larger than the biasing force from the compressed roller spring 23C, and a force that rotates the roller supporting portion 23B in the other rotation direction is generated.
Accordingly, when the above-described external force is eliminated or weakened, the roller supporting portion 23B rotates due to the biasing forces of the roller spring portions 23C, and the rotation axis of the roller main body 23A and the Y-axis become parallel to each other, or nearly parallel.

The X-axis step-feeding handle 23D rotates the roller main body 23A and has a discoid member provided at one of the pair of magnetic rollers 23.
The X-axis step-feeding handle 23D is disposed to be rotatable about a rotation axis that extends in the Y-axis direction, and by rotating the X-axis step-feeding handle 23D, the sensor head 3, X-axis unit 21, etc. are moved in the positive X-axis direction or the negative X-axis direction.

In this embodiment, the X-axis step-feeding handle 23D will be described as applied to an example where it is configured to be rotated step-wise, and, by rotating the X-axis step-feeding handle 23D by a single step, the X-axis step-feeding handle 23D is moved in the positive X-axis direction or the negative X-axis direction by a distance corresponding to a single step.

The X-axis rotary encoder 23E measures the phase of the roller main body 23A or its rotation angle and measures traveled distances of the sensor head 3, the X-axis unit 21, etc. in the positive X-axis direction or the negative X-axis direction. The X-axis rotary encoder 23E is provided at the other roller of the pair of magnetic rollers 23.
Measurement signals output from the X-axis rotary encoder 23E are input to the information processing unit 5 via the encoder connector box 22C, as in the measurement signals output from the Y-axis rotary encoder 22B.

As shown in Figs. 3 to 5 and Fig. 8, the Y-axis guide rod 24 is disposed at the Y-axis unit 22 and is disposed so that it can be relatively moved in the Y-axis direction with respect to the Y-axis unit 22, and the sensor head attachment fork 25 is attached at at least one end thereof.
Specifically, the Y-axis guide rod 24 rotates, together with the Y-axis unit 22, about a rotation axis that extends in the X-axis direction with respect to the X-axis unit 21, and is moved in the Y-axis direction with respect to the X-axis unit 21 and the Y-axis unit 22 by rotating the Y-axis step-feeding handle 22A.

The Y-axis guide rod 24 is provided with a pair of rod-shaped members 24A, which extend in the Y-axis direction and are disposed side-by-side in the X-axis direction, and a pair of end members 24B, which extend in the X-axis direction and connect ends of the pair of the rod-shaped members 24A.

A scale for indicating the position, traveled distance, etc. of the Y-axis guide rod 24 with respect to the Y-axis unit 22 is displayed on one of the pair of the rod-shaped members 24A.
Accordingly, the position and the traveled distance of the sensor head 3 in the Y-axis direction can be visually checked.

The end members 24B are where the sensor head attachment fork 25 is attached in an attachable/detachable manner and the sensor head attachment fork 25 is attached so as to be rotatable about the rotation axis that extends in the Y-axis direction.
This embodiment will be described as applied to an example in which the sensor head attachment fork 25 is attachable/detachable to/from both of the pair of end members 24B. Note that the sensor head attachment fork 25 may be attachable/detachable to/from only one of the pair of end members 24B; it is not particularly limited.

As shown in Figs. 2, 4, and 7, the sensor head attachment fork 25 is attached to the Y-axis guide rod 24 and supports the sensor head holder 26.
Specifically, the sensor head attachment fork 25 moves, together with the Y-axis guide rod 24, in the Y-axis direction with respect to the Y-axis unit 22, and is rotatable about a rotation axis that extends in the Y-axis direction with respect to the Y-axis guide rod 24.

The sensor head attachment fork 25 is provided with attachment portions 25A that are attached to the Y-axis guide rod 24, a fork portion 25B that supports the sensor head holder 26, and fork spring portions 25C that are disposed between the attachment portions 25A and the fork portion 25B.

The attachment portions 25A are attached to the end members 24B in the Y-axis guide rod 24 and support the fork portion 25B.
Specifically, the attachment portions 25A are attached to the end members 24B in an attachable/detachable manner and so as to be rotatable about a rotation axis that extends in the Y-axis direction. The attachment portions 25A support the fork portion 25B in a rotatable manner about a rotation axis that extends in the X-axis direction.

With regard to a configuration related to attachment/detachment of the end members 24B and the attachment portions 25A, a known configuration can be employed, and it is not particularly limited.

The fork portion 25B is supported by the attachment portions 25A in a rotatable manner and supports the sensor head holder 26.
Specifically the fork portion 25B is a plate-like member formed in an angular U-shape and the sensor head holder 26 is placed inside surrounded by the fork portion 25B. The fork portion 25B supports the sensor head holder 26 to be rotatable about a rotation axis that extends in the X-axis direction.

The fork spring portions 25C are disposed between the attachment portions 25A and the fork portion 25B and exert biasing forces that set the orientation of the fork portion 25B relative to the attachment portions 25A to a predetermined posture.
Specifically, ends of the fork spring portions 25C at one side are attached to portions of the attachment portions 25A that protrude in the negative Z-axis direction (pipe P side), and ends of the fork spring portions 25C at the other side are attached to side surfaces of the fork portion 25B.

When no external force is exerted on the fork portion 25B, the fork spring portions 25C are compressed by biasing forces; therefore, the fork portion 25B rotates in the negative Z-axis direction about the rotation axis that extends in the X-axis direction. That is, the fork portion 25B rotates in a direction that brings it closer to the pipe P.

Because of this, in the case where the scanner 2 is attached to the pipe P, the sensor head 3 supported by the fork portion 25B is pressed against the circumferential surface of the pipe P due to the biasing forces of the fork spring portions 25C.

As shown in Figs. 2, 4, and 7 the sensor head holder 26 supports the sensor head 3 and is supported so as to be rotatable with respect to the sensor head attachment fork 25.
Specifically, the sensor head holder 26 is a plate-like member formed in a square shape that surrounds the sensor head 3, and the sensor head 3 is placed in a through-hole formed in a center of the sensor head holder 26.

As shown in Figs. 2, 6, and 7, the X-axis track rail guide 27 is a rod-like or cylindrical member formed of metal that is disposed at the circumferential surface of the pipe P, and defines the movement direction of the X-axis unit 21, etc. Specifically, the X-axis track rail guide 27 is disposed in the groove portions 23F in the roller main bodies 23A in the magnetic rollers 23, over which the roller supporting portions 23B are rotationally moved in the direction in which the X-axis track rail guide 27 extends.

As the X-axis track rail guide 27, one that can be easily deformed to match the circumferential surface of the pipe P and that has sufficient strength to allow the roller supporting portions 23B to rotationally move in the magnetic rollers 23 with respect to the X-axis unit 21 can be employed; it is not particularly limited.

As shown in Figs. 2, 6, and 7, the X-axis track rail fixtures 28 secure the X-axis track rail guide 27 to the pipe P. The X-axis track rail fixtures 28 are provided with pairs of permanent magnets 28A, fixture main bodies 28B, and holding portions 28C.

The pairs of permanent magnets 28A are disposed at positions that sandwich the X-axis track rail guide 27 therebetween, and, together with the fixture main bodies 28B, secure the X-axis track rail guide 27 to the pipe P.
In addition to having the pairs of permanent magnets 28A, the fixture main bodies 28B are provided with the holding portions 28C.
The holding portions 28C are plate-like members that extend from the fixture main bodies 28B, and are gripped by an inspector when the X-axis track rail fixtures 28 are attached or removed.

Fig. 9 is a partial enlarged view for explaining the configuration of the sensor head in Fig. 2.
As shown in Figs. 2 and 9, the sensor head 3 transmits ultrasonic waves to the pipe P and receives ultrasonic waves reflected at the pipe P and internal flaws in the pipe P.
The sensor head 3 is provided with an ultrasonic device 31, a sensor head main body 32, a wedge main body (main body) 33, and an elastic body 34.

The ultrasonic device 31 serves as an oscillator that emits ultrasonic waves and also serves as a sensor that detects reflected ultrasonic waves.
The ultrasonic device 31 is disposed at a surface in the sensor head main body 32 where the wedge main body 33 is attached. The ultrasonic device 31 is connected thereto so that voltage for generating the ultrasonic waves can be input from the ultrasonic flaw-detection inspection unit 4 and so that received signals of the reflected ultrasonic waves can be output to the ultrasonic flaw-detection inspection unit 4.

Examples of the ultrasonic device 31 include those that employ lead-zirconate-titanate based or lead-titanate based ceramics, copolymers of vinylidene fluoride and trifluoride (VDF-TrFE), polymeric membranes of polyvinylidene difluoride (PVDF), etc., piezoelectric thin films employing zinc oxide, etc.; it is not particularly limited.

The sensor head main body 32 is where the ultrasonic device 31 and the wedge main body 33 are attached. The ultrasonic device 31 is disposed at a surface of the sensor head main body 32 that faces the pipe P, and the wedge main body 33 is also attached thereto.
With regard to the configuration of the sensor head main body 32, any configuration may be employed so long as the ultrasonic waves are propagated only toward the pipe P side and aftershocks of the ultrasonic waves emitted from the ultrasonic device 31 are suppressed; it is not particularly limited.

The wedge main body 33 is disposed between the pipe P and both the sensor head main body 32 and the sensor head 3 and defines an angle at which the ultrasonic waves emitted from the sensor head 3 are incident on the pipe P. The wedge main body 33 holds the elastic body 34 internally.
This embodiment will be described as applied to an example in which a surface of the wedge main body 33 that faces the sensor head main body 32 and the sensor head 3 is inclined relative to the surface that faces the pipe P. That is, the description will be given as applied to an example in which the incident ultrasonic waves advance with an inclination relative to the test surface (circumferential surface) of the pipe P.

The elastic body 34 is disposed inside the wedge main body 33 and allows the ultrasonic waves to propagate between the sensor head 3 and the test surface of the pipe P. Because the elastic body 34 is disposed protruding from the wedge main body 33 on the pipe P side, it comes in contact with the test surface of the pipe P when the sensor head 3 is disposed at the test surface of the pipe P.

This embodiment will be described as applied to an example in which konjac (konnyaku), which is an aqueous gel, is employed as the elastic body 34. The elastic body 34 should not block the advance of the ultrasonic waves and should easily deform in accordance with the shape of the test surface of the pipe P. For example, oil-based gel employed for an ultrasonic phantom, etc., or, in addition, gel that includes no dispersion medium to which water or oil leaches out or migrates (for example, segmented polyurethane gel (SPUG)) can be employed; it is not particularly limited.

Fig. 10 is a partial enlarged view for explaining another example of the sensor head in Fig. 9.
For the sensor head 3, konjac (konnyaku) may be employed as the elastic body 34, as shown in Fig. 9, or viscous gel may be employed as an elastic body 34A, as shown in Fig. 10. In addition, oil-based gel, or gel that includes no dispersion medium to which water or oil leaches out or migrates (for example, segmented polyurethane gel (SPUG)) can be employed as the elastic body 34A; it is not particularly limited.

In Fig. 10, a sensor head main body 32A of a sensor head 3A is formed in a rod-like shape, and a bottom surface of the sensor head 3A serves as a sensor head surface where the ultrasonic device 31 is provided.
A cylinder 33A inside which the elastic body 34A is disposed is provided at the bottom end of the sensor head main body 32A. A female threaded portion that engages with a male threaded portion formed on the sensor head main body 32 is formed at the top end of an inner circumferential surface of the cylinder 33A. Examples of materials for forming the cylinder 33A include acrylic plastics, etc.

This embodiment will be described as applied to a case in which the sensor head main body 32A is formed in a rod-like shape having a diameter of about 10 mm, and the length T of the cylinder 33A is about 5 mm or about 10 mm.

Viscous gel, which is the elastic body 34A, disposed inside the cylinder 33A adheres to the sensor head surface of the sensor head 3A and the test surface in the pipe P. The elastic body 34A also serves as a retardant employed when measuring the thickness of a thin wall.
Therefore, by employing the elastic body 34A, inspection for the presence/absence of an internal flaw can be performed with the ultrasonic flaw-detection inspection method, without employing liquid adhesive medium.
An advantage is afforded when hydrophobic oil-based gel is employed as the elastic body 34A in that, because it endures temperature changes in the surroundings and exhibits no changes in properties due to changes in water content, superior durability is provided even in the case of long-term use.
When gel, such as segmented polyurethane gel, etc., that contains no dispersion medium in which leaching and/or migration occur is employed as the elastic body 34 an advantage is afforded in that, because changes in performance over time, such as changes in the properties, a loss of adhesive force, etc. due to changes in water content, do not occur even in the case of a long-term air exposure, superior stability and durability are provided.

As shown in Fig. 1, the ultrasonic flaw-detection inspection unit 4 is used to perform ultrasonic flaw-detection inspection of the pipe P, together with the ultrasonic device 31 in the sensor head 3.
The ultrasonic flaw-detection inspection unit 4 supplies the ultrasonic device 31 with a pulsed voltage for generating ultrasonic waves and receives the received signals related to reflected ultrasonic waves received by the ultrasonic device 31.
As the ultrasonic flaw-detection inspection unit 4, a known unit can be employed; it is not particularly limited.

The information processing section 5 controls the ultrasonic flaw-detection inspection unit 4 and displays images, etc. used to judge the presence/absence of internal flaws in the pipe P, on the basis of signals input from the X-axis rotary encoder 23E and the Y-axis rotary encoder 22B and information input from the ultrasonic flaw-detection inspection unit 4.
As the information processing section 5, a known information processing device, such as a personal computer, can be employed; it is not particularly limited.

Next, a method of inspecting for the presence/absence of an internal flaw with the ultrasonic flaw-detection inspection apparatus 1 with the above-described configuration will be described.
As shown in Figs. 2, 6, and 7, in the case of inspecting the pipe P for an internal flaw, such as a crack, the X-axis track rail guide 27 is bent into a shape that extends along a circumferential surface near a test surface in the pipe P, that is, a surface on which X-axis unit 21, etc. on the scanner 2 move. The X-axis track rail guide 27 that is bent in this way is attached to the circumferential surface of the pipe P with a pair of the X-axis track rail fixtures 28.

This embodiment will be described as applied to an example in which the X-axis track trail guide 27 is attached to an elbow portion of the pipe P that extends along the X-Y plane and that bends in the negative Y-axis direction toward the positive X-axis direction.

Once the X-axis track rail guide 27 is attached to the pipe P, the scanner 2 is subsequently attached near an inspection starting position in the pipe P.
At this time, the roller main bodies 23A of the scanner 2 directly adhere to the circumferential surface of the pipe P by means of a magnetic force. As shown in Fig. 2, the X-axis track rail guide 27 attached to the pipe P is disposed in the groove portions 23F in the roller main bodies 23A.

In this embodiment, because the X-axis track rail guide 27 is bent, the magnetic rollers 23 rotate about the rotation axis that extends in the Z-axis direction to be aligned with the X-axis track rail guide 27, as shown in Fig. 7.

As shown in Fig. 2, the sensor head 3 is disposed at the test surface of the pipe P by rotating, that is, swiveling, the Y-axis unit 22 about the rotation axis that extends in the X-axis direction and by adjusting the placement position of the Y-axis guide rod 24 with respect to the Y-axis unit 22.
When the sensor head 3 comes in contact with the test surface of the pipe P, the sensor head holder 26 rotates about the rotation axis that extends in the X-axis, a surface of the wedge main body 33 that faces the pipe P comes in contact with the test surface, and the elastic body 34 comes in contact with the test surface.

Liquid, such as a couplant (contact medium), oil, water, etc., is applied to the test surface of the pipe P so that the above-described liquid is interposed between the elastic body 34 and the test surface.
By doing so, the elastic body 34 can be brought into close contact with the test surface in the state in which the liquid is interposed therebetween, regardless of the condition of the test surface, such as, the shape, surface roughness, etc. of the test surface. Accordingly, ultrasonic waves can be stably propagated between the elastic body 34 and the test surface.

A pressing force of the sensor head 3 against the pipe P is adjusted by rotation of the fork portion 25B about the rotation axis that extends in the X-axis direction and the biasing forces of the fork spring portions 25C.
Specifically, in the case where the rotation angle of the Y-axis unit 22 is large and the sensor head 3 is strongly pressed against the pipe P, the fork spring portions 25C are expanded and the fork portion 25B rotates in the direction that moves the sensor head 3 away from the pipe P. On the other hand, in the case where the rotation angle of the Y-axis unit 22 is small and the pressing force of the sensor head 3 against the pipe P is small, the fork spring portions 25C is compressed and the fork portion 25B rotates in the direction that moves the sensor head 3 close to the pipe P.

Attachment of the scanner 2 to the pipe P is completed as described above, and, subsequently, the pipe P is inspected for the presence/absence of an internal flaw.
As shown in Fig. 1, the ultrasonic flaw-detection inspection unit 4, to which a control signal has been input from the information processing section 5, outputs a pulsed voltage for generating ultrasonic waves to the sensor head 3. The pulsed voltage is input to the ultrasonic device 31 in the sensor head 3, and the ultrasonic waves are transmitted from the ultrasonic device 31 toward the test surface of the pipe P.

As shown in Fig. 9, the ultrasonic waves from the ultrasonic device 31 are made incident on the test surface of the pipe P via the elastic body 34. If there is an internal flaw, at least part of the ultrasonic waves that is made incident on the pipe P is reflected at the internal flaw. The reflected ultrasonic waves from the test surface of the pipe P are made incident on the ultrasonic device 31 via the elastic body 34.
The ultrasonic device 31 outputs received signals on the basis of the incident ultrasonic waves. The received signals are input to the information processing section 5 via the ultrasonic flaw-detection inspection unit 4.

Then, an inspector moves the scanner 2 along the X-axis track rail guide 27, and inspects the pipe P again.
The scanner 2 is performed by rotating the roller main bodies 32A by rotating the X-axis step-feeding handle 23D. For example, by rotating the X-axis step-feeding handle 23D only by a single step, the scanner 2 is moved by a distance that corresponds to a single step.

At this time, the roller main bodies 23A move on the circumferential surface of the pipe P while rolling and while sandwiching the X-axis track rail guide 27 in the groove portions 23F. In this embodiment, because of the curved X-axis track rail guide 27, the movement along the X-axis track rail guide 27 is performed while the magnetic rollers 23 are rotated, that is, with a phase in which the rotation axes of the roller main bodies 23A intersect with the Y-axis direction.

On the other hand, the movement of the scanner 2 in the X-axis direction is measured by the X-axis rotary encoder 23E. The measurement signals output from the X-axis rotary encoder 23E are input to the information processing section 5.
Upon moving the scanner 2 and the sensor head 3 along the X-axis track rail guide 27 by a predetermined distance, the pipe P is inspected for the presence/absence of an internal flaw again. These processes are repeated until the sensor head 3 reaches an edge of the test surface.

When the sensor head 3 reaches the edge of the test surface, the sensor head 3, etc. are moved in the circumferential direction of the pipe P by moving the Y-axis guide rod 24 in the Y-axis direction by rotating the Y-axis step-feeding handle 22A. For example, by rotating the Y-axis step-feeding handle 22A only by a single step, the sensor head 3 is moved by a distance that corresponds to a single step.

The movement of the sensor head 3 in the circumferential direction is measured by the Y-axis rotary encoder 22B. The measurement signals output from the Y-axis rotary encoder 22B are input to the information processing section.
Subsequently, the entire test surface is inspected for the presence/absence of the internal flaw by repeating the inspection of the pipe P for the presence/absence of the internal flaw and the movement along the X-axis track rail guide 27.

The information processing section 5 performs information processing on the basis of the signals, etc. input from the ultrasonic flaw-detection inspection unit 4, the X-axis rotary encoder 23E, and the Y-axis rotary encoder 22B. Specifically, when there is an internal flaw in the test surface, the position (an X-axis coordinate and a Y-axis coordinate) of the internal flaw in the test surface, the depthwise position thereof, the size of the internal flaw, etc. are calculated.

With the above-described configuration, the X-axis unit 21 and the Y-axis unit 22 that hold the sensor head 3 are attached to the pipe P by the suction force generated from magnetic rollers 23, and are relatively moved with respect to the pipe P by rotating the pair of the magnetic rollers 23. Because the X-axis track rail guide 27 is sandwiched in the groove portions 23F in the magnetic rollers 23, and the magnetic rollers 23 rotate about the rotation axis that extends in the Z-axis direction, the orientation of the magnetic rollers 23 changes to the direction into which the X-axis track rail guide 27 extends, and thus, the X-axis unit 21, etc. can be moved along the X-axis track rail guide 27.

Specifically, because the X-axis unit 21, etc. are directly attached to the pipe P by the suction force generated by the magnetic rollers 23, as compared with a method in which the X-axis unit 21, etc. are attached to the X-axis track rail guide 27 disposed on the pipe P, the X-axis track rail guide 27 does not need to support the weight of the X-axis unit 21, etc. or the sensor head 3, etc. Accordingly, when attaching the X-axis track rail guide 27 to the pipe P, a simple method involving easy attachment/detachment can be employed.

Because the X-axis track rail guide 27 does not need to have the strength required to support the X-axis unit 21, etc. or the sensor head 3, etc., the X-axis track rail guide 27 can easily be deformed into a shape that conforms to the circumferential surface of the pipe P. For example, the X-axis track rail guide 27 can easily be deformed into a shape that conforms to a surface having a complicated shape, such as a surface at an elbow portion of the pipe P, a welded portion in a nozzle stub, etc. In other words, it is easy to cope with the diameter and the shape of the pipe P, which is the inspection target.

On the other hand, because the X-axis unit 21, etc. are attached to the pipe P by the suction force, as compared with, for example, a method in which the X-axis unit 21, etc. are attached to the pipe P by surrounding the pipe P in the form of a ring, the scanner 2 can be reduced in size. Because the X-axis unit 21, etc. having the sensor head 3 are moved with respect to the pipe P by the pair of magnetic rollers 23, as compared with, for example, the case in which the X-axis unit 21, etc. are moved by four magnetic rollers 23, the scanner 2 can be reduced in size.

Accordingly, the occurrence of interference between the X-axis unit 21, etc. and the pipe P can be prevented, and limitations with regard to the size and shape of the pipe P when attaching the X-axis unit 21, etc. to the pipe P can be reduced.
On the other hand, because the size and the costs of the scanner 2 can be reduced, usage in fields where the scanner 2 needs to be disposable is possible. Specifically, usage in inspection of primary cooling system pipes in nuclear power plants is possible.

The magnetic rollers 23 are pressed against the pipe P by the suction force that acts between the magnetic rollers 23 and the pipe P, and the X-axis unit 21, etc. are directly attached to and removed from the pipe P. Accordingly, as compared with the case in which the X-axis unit 21, etc. are attached to the X-axis track rail guide 27 disposed at the pipe P, the attachment and removal of the scanner 2 to and from the pipe P are facilitated.

By having the X-axis track rail fixtures 28 adhere to the pipe P with the X-axis track rail guide 27 sandwiched therebetween, the X-axis track rail guide 27 is attached to the pipe P. On the other hand, by moving the X-axis track rail fixtures 28 away from the pipe P, the X-axis track rail guide 27 can be removed from the pipe P; therefore, attachment/detachment of the X-axis track rail guide 27 is facilitated.

Because the X-axis unit 21, etc. are attached to the pipe P by the suction force generated by the magnetic rollers 23, the X-axis track rail fixtures 28 need to generate a sufficient suction force to attach and secure only the X-axis track rail guide 27 to the pipe P. Accordingly, as compared with, for example, the case in which the X-axis track rail guide 27 supports the X-axis unit 21, etc., the force required for attaching/detaching the X-axis track rail fixtures 28 to/from the pipe P can be small, which facilitates the attachment/detachment of the X-axis track rail guide 27.

Fig. 11 is a schematic view for explaining another example of the scanner in Fig. 2.
In the case in which the pipe P is made of stainless steel alloy, etc. where a magnet does not adhere thereto or an adhering force strong enough to support the weight of the scanner 2 is not generated, the scanner 2 may be disposed at the pipe P by employing a plate-like cover portion P1 formed of a material to which a magnet adheres, such as, a steel plate, etc.; it is not particularly limited.

Specifically, the cover portion P1 is secured to, at least, the circumferential surface of the pipe P where the scanner 2, the X-axis track rail guide 27, the X-axis track rail fixtures 28, etc. are disposed, and the scanner 2, etc. are attached to the cover portion P1 by utilizing the magnetic force.
Subsequently, the sensor head 3 can be relatively moved with respect to the test surface of the pipe P by moving the scanner 2 on the cover portion P1.

### {Second Embodiment}

Next, a second embodiment of the present invention will be described with reference to Figs. 12 to 16.
Although the basic configuration of an ultrasonic flaw detection inspection apparatus of this embodiment is the same as that in the first embodiment, the method of moving a sensor head differs from the first embodiment. Therefore, only the configurations related to the movement of the sensor head will be described for this embodiment by using Figs. 12 to 16, and descriptions of other components, etc. will be omitted.
Fig. 12 is a schematic view for explaining, in outline, the ultrasonic flaw detection inspection apparatus according to this embodiment. Fig. 13 is a front view for explaining the configuration of a scanner in Fig. 12. Fig. 14 is a top view for explaining the configuration of the scanner in Fig. 12. Fig. 15 is a side view for explaining the configuration of the scanner in Fig. 12. Fig. 16 is a partial side view for explaining the configurations of a Y-axis unit and a Y-axis guide rod in Fig. 13.
Components that are the same as those in the first embodiment are given the same reference signs, and descriptions thereof will be omitted.

As shown in Fig. 12, an ultrasonic flaw detection inspection apparatus (non-destructive inspection apparatus) 101 is mainly provided with a scanner (non-destructive inspection scanning apparatus) 102, a scanner controller 106, the sensor head 3, the ultrasonic flaw detecting unit 4, and the information processing section 5.

As shown in Fig. 13 to Fig. 16, the scanner 102 is provided with the X-axis unit 21, a Y-axis unit (casing) 122, magnetic rollers (wheels, suctioning portions) 123, the Y-axis guide rod 24, the sensor head attachment fork 25, and the sensor head holder 26.

The Y-axis unit 122 is provided with a Y-axis step-feeding handle 122A, the Y-axis rotary encoder 22B, and the encoder connector box 22C, and is provided with a Y-axis stepper motor 122D and a stepper-motor connector box 122E.

The Y-axis step-feeding handle 122A, as with the Y-axis step-feeding handle 22A in the first embodiment, moves the Y-axis guide rod 24 in the Y-axis direction and has a discoid member disposed at the top surface of the Y-axis unit 22.

The Y-axis step-feeding handle 122A is configured so that transmission/disconnection of a driving force to the Y-axis guide rod 24 can be selected. For example, when moving the Y-axis guide rod 24 by using the Y-axis stepper motor 122D, the Y-axis guide rod 24 is disconnected.

As shown Figs. 14 and 16, the Y-axis stepper motor 122D is disposed to be rotatable about a rotation axis that extends in the Z-axis direction, and is rotationally driven to thereby move the sensor head 3 and the Y-axis guide rod 24 in the positive Y-axis direction or the negative Y-axis direction.
This embodiment will be described as applied to an example in which the rotation of the Y-axis stepper motor 122D is converted to the movement of the Y-axis guide rode 24 in the positive Y-axis direction or the negative Y-axis direction by providing a rack-and-pinion mechanism between the Y-axis stepper motor 122D and the rod-shaped member 24A in the Y-axis guide rod 24.

The Y-axis stepper motor 122D is connected to the scanner controller 106 via the stepper-motor connector box 122E, and driving current for drive control of the Y-axis stepper motor 122D is supplied from the scanner controller 106.

The stepper motor connector box 122E is a connecting portion between the scanner controller 106 and both an X-axis stepper motor 123D, described later, and the Y-axis stepper motor 122D.

The magnetic rollers 123 are provided with the roller main bodies 23A, the roller supporting portions 23B, and the roller spring portions 23C. Of a pair of the magnetic rollers 123, the X-axis stepper motor 123D is provided on one of them, and the X-axis rotary encoder 23E is provided on the other.

The stepper motor 123D rotates the roller main bodies 23A and is provided in one of the pair of magnetic rollers 23.
The X-axis stepper motor 123D is disposed to be rotatable about a rotation axis that extends in the Y-axis direction and is rotationally driven to thereby move the sensor head 3, the X-axis unit 21, etc. in the positive X-axis direction or the negative X-axis direction.

The X-axis stepper motor 123D is connected to the scanner controller 106 via the stepper-motor connector box 122E, and driving current for performing the drive control of the X-axis stepper motor 123D is supplied from the scanner controller 106.

The X-axis stepper motor 123D is attached to the magnetic rollers 123 in an attachable/detachable manner, and the X-axis step-feeding handle 23D in the first embodiment can be attached to the magnetic rollers 123 once the X-axis stepper motor 123D has been removed therefrom.

As shown in Fig. 12, the scanner controller 106 performs drive control of the X-axis stepper motor 123D and the Y-axis stepper motor 122D via the stepper-motor connector box 122E.

Next, a driving method of the scanner 102, which is a feature of the ultrasonic flaw detection inspection apparatus 101 having the above-described configuration, will be described.
Because the method of attaching the scanner 102 to the pipe P and the method of inspecting for the presence/absence of an internal flaw are the same as those in the first embodiment, descriptions thereof will be omitted.

As shown in Fig. 12, upon receiving a control signal from the information processing section 5, for example, a control signal to move the scanner 102 by a predetermined distance along the X-axis track rail guide 27, the scanner controller 106 outputs the drive current for performing the drive control of the X-axis stepper motor 123D.
The X-axis stepper motor 123D is rotationally driven on the basis of the drive current, and the rotational driving force is transmitted to the roller main bodies 23A. The scanner 102 and the sensor head 3 are moved along the X-axis track rail guide 27 by the rotation of the roller main bodies 23A.

Then, inspection of the pipe P for the presence/absence of an internal flaw is performed. When the inspection for the presence/absence of the internal flaw is completed, the scanner 102 and the sensor head 3 are moved along the X-axis track rail guide 27 again, as described above. This process is repeated until the sensor head 3 reaches the edge of the test surface.

When the sensor head 3 reaches the edge of the test surface, a control signal for moving the sensor head 3 in the circumferential direction of the pipe P, that is, for moving the Y-axis guide rod 24 in the positive Y-axis direction or the negative Y-axis direction, is subsequently output from the information processing section 5 to the scanner controller 106.
When the above-described control signal is input, the scanner controller 106 outputs the drive current for performing the drive control of the Y-axis stepper motor 122D.

The Y-axis stepper motor 122D is rotationally driven on the basis of the drive current, and the Y-axis guide rod 24 is moved in the positive Y-axis direction or the negative Y-axis direction. Consequently, the sensor head 3 is moved in the circumferential direction of the pipe P.
Then, inspection for the presence/absence of an internal flaw is performed for the entire test surface by repeating the inspection of the pipe P for the presence/absence of an internal flaw and the movement along the X-axis track rail guide 27.

With the above-described configuration, the scanner 102 can automatically be moved along the X-axis track rail guide 27 and the sensor head 3 can automatically be moved in the circumferential direction of the pipe P, and there is no need for the inspector to manually move them as with the ultrasonic flaw-detection inspection apparatus 101 in the first embodiment.
Accordingly, the pipe P can be inspected for the presence/absence of an internal flaw even in an area where an inspector cannot enter.

### {Third Embodiment}

Next, a third embodiment of the present invention will be described with reference to Figs. 17 and 18.
Although the basic configuration of an ultrasonic flaw-detection inspection apparatus of this embodiment is the same as that in the first embodiment, the configuration of an X-axis track rail guide differs from the first embodiment. Therefore, only the configurations related to the movement of the sensor head will be described for this embodiment by using Figs. 17 and 18, and descriptions of other components, etc. will be omitted.
Fig. 17 is a schematic view for explaining the positional relationship between an ultrasonic flaw-detection inspection apparatus according to this embodiment and a pipe. Fig. 18 is a front view for explaining the positional relationship between a scanner and an X-axis track rail guide in Fig. 17.
Components that are the same as those in the first embodiment are given the same reference signs, and descriptions thereof will be omitted.

As shown in Figs. 17 and 18, the scanner 2 in an ultrasonic flaw-detection inspection apparatus (non-destructive inspection apparatus) 201 is provided with an X-axis track rail guide (guide portion) 227.

As shown in Figs. 17 and 18, the X-axis track rail guide 227 is a columnar member formed of an elastic body, such as a rubber material, which is disposed at the circumferential surface of the pipe P, and defines the movement direction of the X-axis unit 21, etc. Specifically, the X-axis track rail guide 227 is disposed in the groove portions 23F of the roller main bodies 23A in the magnetic rollers 23 and rotates the roller supporting portions 23B in a direction in which the X-axis track rail guide 227 extends.
The width of the X-axis track rail guide 227 in a cross-section thereof is narrower than the width of the groove portions 23F.

On the other hand, because the X-axis track rail guide 227 is lighter as compared with an X-axis track rail guide 227 formed of a metal material, it can be secured to the surface of the circumferential surface of the pipe P by using double-sided tape, or the like.
The X-axis track rail guide 227 may be secured by using the X-axis track rail fixtures 28 as in the first embodiment; it is not particularly limited.

By forming the X-axis track rail guide 227 of the rubber material in this way, the X-axis track rail guide 227 can be easily deformed into a shape that conforms to the surface of pipe P. In other words, the tracking performance of the X-axis track rail guide 227 with respect to the pipe P can be increased.

### {Fourth Embodiment}

Next, a fourth embodiment of the present invention will be described with reference to Figs. 19 and 20.
Although the basic configuration of an ultrasonic flaw detection inspection apparatus of this embodiment is the same as that in the first embodiment, the configuration of the X-axis track rail guide and the groove portions in the magnetic rollers differs from the first embodiment. Therefore, only the configurations related to the movement of the sensor head will be described for this embodiment by using Figs. 19 and 20, and descriptions of other components, etc. will be omitted.
Fig. 19 is a schematic view for explaining the positional relationship between an ultrasonic search-detection apparatus according to this embodiment and a pipe. Fig. 20 is a front view for explaining the positional relationship between a scanner and an X-axis track rail guide in Fig. 19.
Components that are the same as those in the first embodiment are given the same reference signs, and descriptions thereof will be omitted.

As shown in Figs. 19 and 20, the scanner 2 in an ultrasonic flaw-detection inspection apparatus (non-destructive inspection apparatus) 301 is provided with magnetic rollers (wheels, suctioning portion) 323 and an X-axis track rail guide (guide portion) 327.

The magnetic rollers 323 are portions that come in contact with the pipe P and adhere thereto, and move the scanner 2 along the surface of the pipe P. The magnetic rollers 323 are attached to the X-axis unit 21 at one end and the other end in the X-axis direction, respectively, and are attached to be rotatable about rotation axes that extend in the Z-axis direction.

Groove portions 323F are formed at circumferential surfaces of the roller main bodies 23A in the magnetic rollers 323 that come in contact with the pipe P.
The groove portions 323F are recesses formed in the circumferential surfaces of the roller main bodies 23A in a ring-like manner, and the X-axis track rail guide 327 is sandwiched therein when the roller main bodies 23A are adhered to the pipe P.

Wheel-side toothed portions 323G in which protrusions and recesses are arranged in a circumferential direction of the groove portions 323F are provided at the bottom surfaces of the groove portions 323F. In other words, the groove portions 323F are formed like the grooves of timing pulleys or like pulley grooves that engage with toothed belts.

The wheel-side toothed portions 323G engage with guide-side toothed portion 327G in the X-axis rail guide 327.
Specifically, the wheel-side toothed portions 323G are formed of protrusion portions and recess portions that extend in a direction along the rotation axes of the roller main bodies 23A and that are alternately arranged in the circumferential direction of the groove portions 323F. Although this embodiment is described as applied to an example in which four protrusion portions and four recess portions are alternately arranged, it is not limited to this.

The X-axis track rail guide 327 is provided with a guide-side toothed portion (guide-side toothed portion) 327G in which protrusions and recesses are arranged in a longitudinal direction of the X-axis track rail guide 327. In other words, the X-axis track guide rail guide 327 is formed like a timing belt or a toothed belt (cog belt).

The guide-side toothed portion 327G engages with the wheel-side toothed portions 323G in the groove portions 323F.
Specifically, the guide-side toothed portion 327G is formed of protruding portions and recess portions that extend perpendicular to the longitudinal direction of the X-axis track rail guide 327 and that are alternately arranged in the longitudinal direction of the X-axis track rail guide 327.

With the above-described configuration, due to the engagement between the guide-side toothed portion 327G and the wheel-side toothed portions 323G, the relative position of the scanner 2 with respect to the X-axis track rail guide 327 disposed at the pipe P can be accurately maintained.

For example, in the case in which the X-axis track rail guide 327 is disposed at a surface of the pipe P extending in the top-bottom direction, the scanner 2 is moved in the top-bottom direction against the force of gravity. At this time, slipping tends to occur between the magnetic rollers 323 and the pipe P, and the relative position between the X-axis track rail guide 327 disposed at the pipe P and the scanner 2 tends to change.

On the other hand, when the guide-side toothed portion 327G is engaged with the wheel-side toothed portions 323G, part of the downward force exerted on the scanner 2 due to gravity is received by the X-axis track rail guide 327. Accordingly, it is less likely that slipping occurs between the magnetic rollers 323 and the X-axis track rail guide 327, and the relative position between the X-axis track rail guide 327 disposed at the pipe P and the scanner 2 is less likely to change.

### {Fifth Embodiment}

Next, a fifth embodiment of the present invention will be described with reference to Figs. 21 to 24.
Although the basic configuration of an ultrasonic flaw detection inspection apparatus of this embodiment is the same as that in the first embodiment, the configuration of the wheels differs from the first embodiment. Therefore, only the configurations related to the movement of the sensor head will be described for this embodiment by using Figs. 21 to 24, and descriptions of other components, etc. will be omitted.
Fig. 21 is a front view for explaining the configuration of wheels of a scanner according to this embodiment. Fig. 22 is a side view for explaining the configuration of the wheels in Fig. 21.
Components that are the same as those in the first embodiment are given the same reference signs, and descriptions thereof will be omitted.

As shown in Figs. 21 and 22, a scanner 402 in an ultrasonic flaw-detection inspection apparatus 401 of this embodiment is mainly provided with the X-axis unit 21, the Y-axis unit 22, and wheels 423.

The wheels 423 come in contact with the pipe P and move the scanner 2 along the surface of the pipe P. The wheels 423 are provided in the X-axis unit 21 at one end and the other end thereof in the X-axis direction, respectively, and are attached to be rotatable about a rotational axis that extends in the Z-axis direction.

The wheels 423 are provided with roller main bodies 423A, the roller supporting portions 23B, and the roller spring portions 23C. The X-axis step-feeding handle 23D is provided on one of the pair of the magnetic rollers 23 and the X-axis rotary encoder 23E is provided on the other.

The roller main bodies 423A are supported by the roller supporting portions 23B to be rotatable about a rotation axis that extends in the Y-axis direction, and are rod-like members that revolve at the outer circumferential surface of the pipe P.
The groove portions 23F are formed at the circumferential surfaces of the roller main bodies 423A, at nearly the center thereof in the Y-axis direction, and a ring portion 423G that comes in contact with the outer circumferential surface of the pipe P is provided at each of circumferential surfaces that are bisected by the groove portions 423F.

The ring portion 423G is formed of a circular ring-like elastic member, which is formed of for example, rubber. This embodiment will be described as applied to an example in which the ring portion 423G is provided at each of the bisected circumferential surfaces.

Fig. 23 is a schematic view for explaining a state in which a scanner in Fig. 21 is disposed on a pipe.
As shown in Fig. 23, an attaching belt portion 450 is employed when the above-described scanner 402 is disposed on the pipe P.
The attaching belt portion 450 attaches the scanner 402 in this embodiment, which does not have means of adhering to the pipe P, such as the magnetic rollers 23, etc., to the pipe P, and supports the scanner 402 so that it can be moved over the circumferential surface of the pipe P along the plane of Fig. 23.
The attaching belt portion 450 is mainly provided with a plurality of carriages 451 and a belt 452.

The plurality of carriages 451 have wheels that move over the circumferential surface of the pipe P together with the scanner 402 and are pressed against the circumferential surface of the pipe P by the belt 452 along with the scanner 402. The carriages 451 hold the belt 452 at a predetermined distance away from the circumferential surface of the pipe P.
This embodiment will be described as applied to an example in which the scanner 402 is attached to the pipe P by employing ten carriages 451.

The carriages 451 that are adjacent to the scanner 402 are connected to the wheels 423 of the scanner 402 with connecting portions 453. The connecting portions 453 connect the carriages 451 and the scanner 402 without inhibiting the rotation of the wheels 423.

The belt 452 is disposed over the carriages 451, which are disposed on the circumferential surface of the pipe P at predetermined intervals, so as to wrap around the pipe P, and presses the scanner 402 and the carriages 451 against the circumferential surface of the pipe P.

The scanner 402 that is attached by employing the attaching belt portion 450 can be moved over the circumferential surface of the pipe P in the circumferential direction thereof by the rotation of the wheels 423 and the rotation of wheels of the carriages 451. In other words, the scanner 402 can be moved, together with the attaching belt portion 450, over the circumferential surface of the pipe P in the circumferential direction thereof.
By doing so, the scanner 402 can be attached to the pipe P regardless of the material of the pipe P. That is, the scanner 402 can be attached to the pipe P, even if the pipe P is formed of a material (non-magnetic material, weakly magnetic material, etc.) to which the scanner 402 cannot be attached to the pipe P solely with magnetic adherence.

Fig. 24 is a schematic view for explaining the state in which the scanner in Fig. 21 is disposed on a pipe that extends in the vertical direction.
Here, in the case where the pipe P is disposed to extend in the horizontal direction, the scanner 402 can be stably attached to the circumferential surface of the pipe P by employing the attaching belt portion 450.
On the other hand, as shown in Fig. 24, in the case where the pipe P extends in the vertical direction, etc., the scanner 402 may shift downward, even if the attaching belt portion 450 is employed.

Accordingly, in the case where the scanner 402 may shift downward or may move in directions other than the movement directions due to the rotation of the wheels 423, particularly in the case where the scanner 402 may shift downward due to gravity, a downward-shift preventing portion (shift prevention portion) 461 may be employed, as shown in Fig. 24.

The downward-shift preventing portion 461 is a member that is disposed over the circumferential surface of the pipe P by being wrapped therearound and is disposed thereon by extending in the circumferential direction of the pipe P, which is the movement direction of the scanner 402. The downward-shift preventing portion 461 prevents the downward shift of the scanner 402 by supporting the scanner 402 from below (bottom side of Fig. 24) by coming in contact with side surfaces of the wheels 423 in the scanner 402.

The downward-shift preventing portion 461 may be employed in the scanners described in the first embodiment to the fourth embodiment described above; it is not particularly limited.

### {Reference Signs List}

1, 101, 201, 301 ultrasonic flaw-detection inspection apparatus (non-destructive inspection apparatus)
2, 102 scanner (non-destructive inspection scanner apparatus)
3, 3A sensor head
4 ultrasonic flaw-detection inspection unit (control unit)
21 X-axis unit (casing)
22, 122 Y-axis unit (casing)
23, 123, 323 magnetic roller (wheel, suctioning portion) 23F, 323F groove portion
27, 227, 327 X-axis track rail guide (guiding portion)
28 X-axis track rail fixture (securing portion)
31 ultrasonic device
33 wedge main body (main body)
34, 34A elastic body
323G wheel-side toothed portion
327G guide-side toothed portion (guide-side toothed portion)
461 downward-shift preventing portion (shift prevention portion)
P pipe (inspection target)
P1 cover portion

## Claims

1. A non-destructive inspection scanning apparatus that relatively moves a sensor head employed to detect a flaw in an inspection target with respect to a test surface of the inspection target, comprising:
a rod-shaped guide portion that is disposed at the inspection target and that extends along a surface of the inspection target;
a pair of wheels having a ring-like groove portion, which sandwiches the guide portion therein, at a circumferential surface that comes in contact with the inspection target;
a suctioning portion that generates a suction force that presses the wheels against the inspection target; and
a casing that holds the sensor head and to which the pair of wheels are attached so as to be rotatable about a rotation axis that extends in a direction that intersects a surface of the inspection target to which the wheels come in contact.

2. A non-destructive inspection scanning apparatus according to Claim 1, wherein
the inspection target is formed of a magnetic material; and
the suctioning portion generates a suction force with respect to the inspection target with a magnetic force.

3. A non-destructive inspection scanning apparatus according to Claim 2, wherein the guide portion is attached to the inspection target with a securing portion that adheres to the inspection target with a magnetic force.

4. A non-destructive inspection scanning apparatus according to any one of Claims 1 to 3, wherein the guide portion is formed of an elastic material.

5. A non-destructive inspection scanning apparatus according to Claim 4, wherein
a guide-side toothed portion, in which protrusions and recesses are arranged along a longitudinal direction of the guide portion, is provided in a region of the guide portion that faces the wheels; and
a wheel-side toothed portion that engages with the guide-side toothed portion and that has protrusions and recesses arranged in the circumferential direction of the groove portion is provided at a bottom surface of the groove portion.

6. A non-destructive inspection scanning apparatus according to Claim 1, wherein
the inspection target is formed of a non-magnetic material;
a cover portion formed of a magnetic material is disposed at at least a region of the inspection target where the guide portion is disposed; and
the suctioning portion generates a suction force with respect to the inspection target by means of a magnetic force.

7. A non-destructive inspection scanning apparatus according to any one of Claims 1 to 6, wherein a shift prevention portion, which extends along a direction in which the wheels move, is disposed at a position in the inspection target that is adjacent to the wheels.

8. A non-destructive inspection apparatus comprising:
a sensor head that is employed to detect a flaw in an inspection target;
a control unit that controls the sensor head; and
a non-destructive inspection scanning apparatus according to any one of Claims 1 to 7 that relatively moves the sensor head with respect to the inspection target.

9. A non-destructive inspection apparatus according to Claim 8, wherein the sensor head includes
an ultrasonic device that transmits and receives ultrasonic waves;
an elastic body that is disposed between the ultrasonic device and the test surface and that propagates the ultrasonic waves between the ultrasonic device and the test surface; and
a main body that holds the ultrasonic device and the elastic body.

10. A non-destructive inspection apparatus according to Claim 9, wherein the elastic body is formed of an aqueous gel.

11. A non-destructive inspection apparatus according to Claim 9, wherein the elastic body is formed of an oil-based gel.

12. A non-destructive inspection apparatus according to Claim 9, wherein the elastic body is formed of a gel that does not contain a dispersion medium that leaches and/or migrates.

13. A sensor head employed in detecting a flaw in an inspection target, comprising:
an ultrasonic device that transmits and receives ultrasonic waves; and
an elastic body that is disposed between the ultrasonic device and a test surface of the inspection target and propagates the ultrasonic waves between the ultrasonic device and the test surface,
wherein the elastic body is of an aqueous gel.

14. A sensor head employed in detecting a flaw in an inspection target, comprising:
an ultrasonic device that transmits and receives ultrasonic waves; and
an elastic body that is disposed between the ultrasonic device and a test surface of the inspection target and propagates the ultrasonic waves between the ultrasonic device and the test surface,
wherein the elastic body is of oil-based gel.

15. A sensor head employed in detecting a flaw in an inspection target, comprising:
an ultrasonic device that transmits and receives ultrasonic waves; and
an elastic body that is disposed between the ultrasonic device and a test surface of the inspection target and propagates the ultrasonic waves between the ultrasonic device and the test surface,
wherein the elastic body is a gel that does not contain a dispersion medium that leaches and/or migrates.
